# EUROPÄISCHE PATENTSCHRIFT

(11) **EP 3 808 537 B1**
(45) Veröffentlichungstag und Bekanntmachung des Hinweises auf die Patenterteilung: **14.09.2022**
(21) Anmeldenummer: 20200562.5
(22) Anmeldetag: 07.10.2020
(51) Int. Cl.: B29C 55/20, B29C 55/12

(54) **KLUPPENWAGEN FÜR EINE TRANSPORTKETTENANORDNUNG EINER RECKANLAGE SOWIE EINE ZUGEHÖRIGE RECKANLAGE**
NIPPER CARRIAGE FOR A TRANSPORT CHAIN ASSEMBLY OF A STRETCHING DEVICE AND ASSOCIATED STRETCHING DEVICE
CHARIOT À PINCES POUR UN AGENCEMENT DE CHAÎNE DE TRANSPORT D'UNE INSTALLATION D'ÉTIRAGE AINSI QU'INSTALLATION D'ÉTIRAGE ASSOCIÉE

(30) Priorität: 15.10.2019 DE 102019127701
(43) Veröffentlichungstag der Anmeldung: 21.04.2021
(73) Patentinhaber: Brückner Maschinenbau GmbH & Co. KG, 83313 Siegsdorf (DE)
(72) Erfinder: Bauer, Michael, 83123 Amerang (DE); Rott, Thomas, 83313 Siegsdorf (DE); Unterreiner, Markus, 83250 Marquartstein (DE); Schumacher, Daniela, 83278 Kammer (DE); Mitterer, Matthias, 83236 Übersee (DE); Giapoulis, Anthimos, 83278 Traunstein (DE)
(74) Vertreter: Flach Bauer Stahl Patentanwälte Partnerschaft mbB

(56) Entgegenhaltungen:
- DE-A1- 4 006 440
- DE-A1- 4 241 213
- DE-C2- 4 006 440

## Beschreibung

Die Erfindung betrifft Kluppenwagen für eine Transportkettenanordnung einer Reckanlage sowie eine zugehörige Reckanlage nach dem Oberbegriff des Anspruches 1.

Reckanlagen finden insbesondere bei der Kunststofffolienherstellung Anwendung. Neben sogenannten Simultan-reckanlagen, in welchen ein Kunststofffilm gleichzeitig in Quer- und Längsrichtung gereckt wird, sind vor allem sogenannte sequentielle Reckanlagen bekannt, bei denen ein Kunststofffilm in zwei aufeinanderfolgenden Stufen gereckt wird, beispielsweise zunächst in Längsrichtung und dann in Querrichtung (oder umgekehrt), um so eine Kunststofffolie zu erzeugen. Ebenso bekannt sind einstufige Reckanlagen beispielsweise in Form einer Längs- oder einer Querreckanlage.

Die zu reckende Materialbahn, in der Regel also ein Kunststofffilm, wird mittels Klemmvorrichtungen (sogenannte Kluppen) erfasst, die auf beiden Seiten der zu reckenden Materialbahn auf umlaufenden Führungsbahnen verfahrbar angeordnet sind. Die Kluppen werden dabei nacheinander von einer Einlaufzone (in welcher der Rand beispielsweise einer zu reckenden Kunststofffolie erfasst wird) über eine Reckzone (in der die gegenüberliegenden Kluppen auf den Führungsschienenabschnitten mit einer Querkomponente divergierend zur Transportrichtung voneinander wegbewegt werden) zu einer Auslaufzone und dann auf dem Rückweg wieder zur Einlaufzone verfahren, wobei die Folie in der Auslaufzone beispielsweise einer gewissen Relaxation und/oder Wärmenachbehandlung unterzogen werden kann.

Die eingangs erwähnten sequentiellen oder Querreckanlagen weisen üblicherweise zwei symmetrisch zu einer vertikalen Symmetrieebene angeordnete umlaufende Führungsbahnen auf, wobei jede Führungsbahn eine teilweise oder ganz umlaufende Führungsschiene umfasst, längs derer sogenannte Kluppenglieder oder Kluppenwagen verfahren bzw. bewegt werden. Insbesondere dann, wenn die Kluppenwagen mittels umlaufender Kettensysteme angetrieben werden, sind in der Regel zumindest an der Auslaufzone, sowie ggf. an der Einlaufzone Kettenräder vorgesehen, über die die umlaufende Kette fortbewegt und angetrieben wird.

Die Kluppen werden also dabei zum Längsbewegen der Materialbahn insbesondere in Form eines zu reckenden Films benötigt. Die Kluppen oder Kluppenwagen sind in der Regel an umlaufenden Ketten (Endlosketten) befestigt, die an beiden Seiten der zu reckenden Materialbahn auf den erwähnten umlaufenden Führungsbahnen verfahrbar angeordnet sind. Ferner sind Simultanreckanlagen ohne Kettensysteme bekannt, bei denen die Kluppenwagen durch Linearmotorantriebe angetrieben werden, bei denen also aufeinander folgende Kluppenwagen durch elektromotorische Kräfte fortbewegt werden.

In der eigentlichen Reckzone verlaufen dabei die Führungsbahnen auf divergierenden Wegen, so dass der Seitenabstand zwischen den auf den beiden seitlichen umlaufenden Bahnen verfahrbaren Kluppen zunimmt. Dabei wird der Film in Querrichtung gereckt.

Die Kluppenwagen selbst können gegenüber den Führungsschienen mittels Laufrollen und/oder unter Verwendung von Gleitelementen gelagert sein. Auch Mischsysteme aus Rollen und Gleitelementen sind möglich.

Insbesondere dann, wenn Reckanlagen zur Fortbewegung der Kluppenwagen längs der Führungsbahnen umlaufende Transportketten verwenden, besteht das Problem, dass der Kontakt der Laufrollen oder der Gleitelemente nicht zu 100% an den Lauf- oder Gleitflächen des Führungsschienensystems sichergestellt werden kann. Es ist sogar ein Klemmen der Führungsrollen oder Gleitelemente möglich, wenn nämlich die Laufrollen oder die Gleitelemente starr an der Kette angeordnet sind.

Ein Klemmen der Laufrollen oder Gleitelemente führt aber zu Überlastungen der Laufrollen bzw. der Gleitelemente und damit zu einer kürzeren Lebensdauer. Auftreten können zudem aber auch größere Gesamtschäden.

Dies kann durch verschiedene Gründe verursacht werden, nämlich:
a) es können Fertigungstoleranzen an den Bauteilen bestehen, insbesondere an der Führungsschiene, an den Führungswagen wie aber auch an den Führungsschienen abrollenden Laufrollen bzw. den hier längs gleitenden Gleitelementen, und/oder
b) es treten längs der Führungsschienenanordnung veränderliche effektive Schienendicken auf, wie dies grundsätzlich bei der Krümmung der Führungsschienen festzustellen ist.

Wenn aber die Laufrollen bzw. die Gleitelemente nicht zu 100% an den Führungsflächen der Führungsschienen anliegen, kann es zu folgenden Effekten kommen:
a) die Laufrollen bzw. die Gleitelemente haben keinen kontinuierlichen Kontakt mit den Lauf- oder Gleitflächen der Führungsschienenanordnung, was dazu führt, dass die Laufrollen bzw. die Gleitelemente zeitweise, zumindest also kurzzeitig von der Führungsschienenanordnung abheben können und dann wieder aufsetzen, so dass dies zu permanenten Stoßbelastungen führt, und/oder
b) insbesondere bei der Verwendung von Laufrollen kann es dazu kommen, dass diese nicht an der Lauffläche der Führungsschienenanordnung anliegen und deshalb deren Drehzahl abnimmt, so dass beim Aufsetzen der Laufrollen diese eine Relativgeschwindigkeit zur Führungsschiene aufweisen. Dies hat zur Folge, dass die Außenringe der Laufrollen beschleunigt werden müssen und es zwischenzeitlich zu Gleiteffekten zwischen den betreffenden Laufflächen der Führungsschiene und dem Außenring der Laufrollen kommt. Zudem kann auch die Wälzgeometrie diesem Effekt unterliegen.

Vor diesem Hintergrund ist bereits versucht worden, Lösungen zu finden, die diese Nachteile zumindest verringern.

So ist bereits vorgeschlagen worden, für die Führungsschienenanordnung die Führungsschienen nicht aus einem integralen starren (monolithischen) Legierungsmaterial herzustellen, sondern sog. flexible Führungsschienen zu verwenden, die aus einem Paket von parallel zu einander verlaufenden Führungsschienen-Bändern bestehen und dadurch eine gewisse Federung erzeugen. Dadurch soll der Abstand zwischen den gegenüberliegenden Laufflächen stets so ausgeglichen werden, dass alle Laufrollen an den jeweils ihnen zugeordneten Laufflächen der Führungsschienenanordnung abrollen.

Allerdings ist in diesem Zusammenhang als nachteilig festzuhalten, dass die Geradeausbildung der Führungsschienenanordnung schlechter wird und damit zusätzliche Schwingungsanregungen für das Kettensystem erzeugt werden. Zudem unterliegt die Formabweichung der Bänder Schwankungen, die nicht gezielt gesteuert werden können, wodurch sich ein undefiniertes Kraftniveau ergibt.

Von daher sind ferner auch flexible Rollschienen mit einer integrierten definierten Federung vorgeschlagen worden. Dies führt allerdings zu einer deutlichen Vergrößerung des hierfür benötigten Bauraums.

Der Bauraum ist in entsprechenden Reckanlagen jedoch sehr stark limitiert, so dass andererseits Führungsschienenanordnungen mit möglichst geringer Schienendicke bevorzugt werden. Zudem sind mehrteilige Schienenquerschnitte aufwendiger und damit kostenintensiver.

Alternativ zu den vorstehend genannten Lösungen ist ebenfalls schon vorgeschlagen worden, die Laufrollen eines Kluppenwagens abhängig von der jeweiligen Schienenseite auf unterschiedlichen Bauteilen zu lagern.

So wird gemäß der DE 40 06 440 C2 vorgeschlagen, beispielsweise eine oder mehrere Laufrollen auf der filmabweisenden Seite auf dem Kluppenwagen direkt zu montieren, die dann an der filmabgewandten Seite der Führungsschiene abrollen. Die dazu auf der gegenüberliegenden Seite der Führungsschiene vorgesehene zumindest eine Laufrolle ist dann nicht auf dem Kluppenwagen, sondern auf der die einzelnen Kluppen über Kettenhebel verbindenden Kettenanordnung gelagert. Dadurch ergibt sich ein Freiheitsgrad in der Anpassung der Laufrollenabstände an die Rollschienen- bzw. Rollschienenpaketdicke.

Diese zumindest eine Laufrolle, die an der Kette gelagert ist, ermöglicht, dass diese Laufrolle gegenüber dem Kluppenwagen in Querrichtung zur Führungsschiene unter stetiger Vorspannung lageveränderlich gehalten wird. Dabei wirken die über die Kettenhebel eingeleiteten Zugkräfte im Sinne einer Kraftumlenkeinrichtung derart auf die Laufrolle, dass die Kettenspannung, die durch die von einem auf einen nächsten Kettenwagen übertragenen Zugkräfte erzeugt wird, in eine im Wesentlichen quer auf die zugehörige Lauffläche zu gerichtete und damit die Laufrolle druckbeaufschlagende Vorspannkraft umgewandelt wird. Mit anderen Worten wird der Längszug in den Kettenhebeln in eine Längs- und in eine Querkraft aufgeteilt, wenn die Kettenhebel nicht genau in Zugrichtung stehen.

Die hierüber einstellbare und kraftbeaufschlagte Laufrolle sitzt also auf einer von einem 180° Winkel abweichenden Kettenhebelanordnungen, wodurch letztlich durch die Kettenzugkräfte eine Kraftaufteilung bewirkt wird, nämlich einmal in Laufrichtung zur Führungsschiene und zum anderen senkrecht dazu. Solange die Kettenglieder im geraden Rollschienenbereich einen entsprechenden Winkel zwischen den beiden die einstellbare Laufrolle tragenden Kettenhebeln aufweisen, wird eine entsprechende Querkraft erzeugt, welche die Laufrolle zur Anlage bringt.

Die in der DE 40 06 440 C2 beschriebene Vorrichtung erzielt bei derzeitigen Folienreckanlagen sehr gute Ergebnisse. Bei hohen Geschwindigkeiten und zunehmender Anlagenlänge ist allerdings die hierdurch erzeugte Querkraft stets abhängig zum einen vom Winkel der beiden die Laufrolle tragenden Kettenglieder und vor allem auch von den eingeleiteten Antriebs- und Längszugkräften, wobei die Kräfte wiederum auch durch den Reibwert der die Kettenhebel verbindenden Verbindungsbolzen verringert wird.

Mit anderen Worten ist also die Anlagekraft der einstellbaren Laufrolle vom Kettenlängszug abhängig und damit sehr variabel.

Bei hohen Kettenlängszügen und hohen Geschwindigkeiten und mit zunehmender Anlagenlänge, mit welcher zukünftig gerechnet werden kann, treten sehr hohe Anlagekräfte an der Laufrolle auf, wohingegen bei niedrigem Längskettenzug diese Anlagekräfte gegebenenfalls nicht ausreichend sein können. Dabei ist die Anlagekraft ferner abhängig vom Reibwert der gelenkigen Verbindungen. Bei sehr hohen Reibwerten im Zusammenhang mit hohen Geschwindigkeiten und zunehmender Anlagenlänge zukünftiger Folienreckanlagen könnte es dazu kommen, dass die Laufrolle dann nicht mehr an der ihr zugeordneten Lauffläche der Führungsschiene anliegt.

Ausgehend von diesem Stand der Technik ist es Aufgabe der Erfindung, eine verbesserte Lösung für eine kettenbasierte Reckanlage zu schaffen, bei welcher die an einer Führungsschienenanordnung längsgeführten Laufrollen und/oder Gleitelemente auch bei hoher Anlagengeschwindigkeit und unabhängig von der Anlagenlänge in stetigem Kontakt gehalten werden sollen.

Die Aufgabe wird erfindungsgemäß bezüglich eines Kluppenwagens für eine Transportkettenanordnung einer Reckanlage entsprechend den im Anspruch 1 angegebenen Merkmalen und bezüglich eines Sets umfassend einen Kluppenwagen und zumindest einem Kettenteilabschnitt entsprechend den im Anspruch 10 angegebenen Merkmalen und bezüglich einer mit einer Transportkette ausgestatteten Reckanlage entsprechend den im Anspruch 11 angegebenen Merkmalen gelöst. Vorteilhafte Ausgestaltungen der Erfindung sind in den Unteransprüchen angegeben.

Die erfindungsgemäße Lösung basiert darauf, dass die Anpresskraft zumindest einer Laufrolle oder zumindest eines Gleitelementes an einer zugehörigen Führungsschienenanordnung von den Antriebskräften, die auf die Kluppenwagen und/oder Kettenglieder wirken, entkoppelt und davon unabhängig ist, d.h. insbesondere unabhängig ist von einer Kettenlängskraft im Falle einer Reckanlage, bei der die einzelnen Kluppenwagen mittels verbindender Kettenglieder angetrieben und durch die Reckanlage hindurchgeführt werden. Dies gilt unabhängig davon, ob die einzelnen Kluppenwagen über separate Kettenglieder miteinander verbunden sind (so dass der Kraftfluss der angetriebenen Kettenanordnung über die einzelnen Kluppenwagen hinweg verläuft), oder ob eine durchgängige Kettenanordnung verwendet wird, bei der die Kluppen als separates Bauteil auf der Kette montiert sind und nicht im Kraftfluss des Kettenlängszuges liegen.

Erfindungsgemäß wird dabei von einem Kluppenwagen ausgegangen, der auf der materialbahnabweisenden Seite der Führungsschienenanordnung eine oder mehrere Laufrollen und/oder ein oder mehrere Gleitelemente aufweist, die in der Regel fest und starr und damit zumindest in Querrichtung des Kluppenwagens nicht verstellbar an diesem gehalten und montiert sind. Durch diese Laufrollen und/oder Gleitelemente können vor allem die Film- und/oder Reckkräfte optimal abgestützt werden.

Auf der dazu gegenüberliegenden Seite, d.h. der filmzugewandten Seite, sind dann zumindest eine oder mehrere Ausgleichsrollen und/oder eine oder mehrere Ausgleichsgleitelemente vorgesehen, die gegenüber dem Kluppenwagen in zumindest einer quer zur Führungsschienenanordnung verlaufenden Komponente verstellbar sind, um hier die gewünschten Anpresskräfte unter Sicherstellung eines spielfreien Kontaktes zu den Lauf- oder Gleitflächen der Führungsschienenanordnung zu erzeugen. Dabei wird nachfolgend häufig anstelle einer Ausgleichsrolle oder einem Ausgleichsgleitelement von einer Stabilisierungsrolle oder einem Stabilisierungs-Gleitelement gesprochen.

Möglich wäre es auch, dass mehrere Stabilisierungsrollen eingesetzt werden, wobei jeweils zumindest eine Stabilisierungsrolle auf der filmzugewandten Seite und der filmabseitigen (materialbahnabweisenden) Seite angeordnet ist. Diese (zumindest beiden) Stabilisierungsrollen sind in Höhenrichtung versetzt zueinander angeordnet. Eine Stabilisierungsrolle ist näher an der oberen Lastschienenfläche der Führungsschiene der Führungsschienenanordnung angeordnet als die andere Stabilisierungsrolle und die andere Stabilisierungsrolle ist näher an der zur oberen Lastschienenfläche gegenüber liegend angeordneten (unteren) Gegenschienenfläche der Führungsschiene angeordnet. In diesem Fall sind auch die Laufrollen oder die Gleitelemente sowohl auf der filmzugewandten Seite als auch auf der filmabseitigen Seite angeordnet. Die jeweilige eine Laufrolle oder ein Paar von Laufrollen bzw. Gleitelementen ist ungefähr (Abweichung weniger als +-20%) auf Höhe der jeweiligen Stabilisierungsrolle, allerdings auf der anderen Seite der Führungsschiene, angeordnet. Zwischen Laufrolle und dazu korrespondierender Stabilisierungsrolle bzw. Stabilisierungs-Gleitelement verläuft die Führungsschiene.

Dabei schlägt die Erfindung ferner vor, zumindest eine druckbeaufschlagte Ausgleichsrolle oder zumindest ein druckbeaufschlagtes Ausgleichsgleitelement zu verwenden, um letztlich auch die auf der Gegenseite der Führungsschiene oder der Führungsschienenanordnung abrollenden Laufräder oder längsgleitenden Gleitelemente in stetigem Kontakt mit der dortigen zugeordneten Lauf- oder Gleitfläche der Führungsschienenanordnung zu halten.

Dabei hat es sich im Rahmen der Erfindung als besonders günstig erwiesen, wenn die Ausgleichs- oder Stabilisierungseinheiten, also die zumindest eine Stabilisierungs- oder Ausgleichsrolle oder das zumindest eine Stabilisierungs- oder Ausgleichsgleitelement auf einer Hebelanordnung sitzt, welche mit dem gewünschten Kraft- oder Kraftfederspeicher vorzugsweise in Form einer Federeinrichtung druckbeaufschlagt ist.

Mit einer derartigen gefederten Stabilisierungsrolle oder mit einem derartigen gefederten Stabilisierungs-Gleitelement kann erreicht werden, dass weitgehend unabhängig von den Betriebszuständen, d.h. also weitgehend unabhängig von Geschwindigkeits-, Produkts- und/oder Verschmutzungszuständen die Anlage der Stabilisierungsrollen und/oder der Stabilisierungs-Gleitelemente gewährleistet wird. Die beim Stand der Technik geschilderten Nachteile werden somit auch bei hohen Anlagengeschwindigkeiten und Anlagenlängen überwunden.

Für die Stabilisierung der Kluppenwagen auf dem Führungssystem sind die gefederten Stabilisierungsrollen oder die gefederten Stabilisierungs-Gleitelemente voll ausreichend, um Störstellen in Form von Dickentoleranzen, Unebenheiten oder Geometrieveränderungen an der Laufschiene stets ausgleichen zu können. Vor allem aber durch die minimierte Masse der gefederten Stabilisierungsrolle oder des Stabilisierungs-Gleitelementes wird ein System realisierbar, das hoch dynamisch reagieren kann, wobei die Hauptmassen sich gleichmäßig auf dem Führungssystem, also der Führungsschienenanordnung bewegen können.

Die zumindest eine gefederte Stabilisierungsrolle oder das zumindest eine gefederte Stabilisierungs-Gleitelement ist mittels einer Führungseinrichtung:
a) unmittelbar am Kluppenwagen und insbesondere am Kluppenkörper gehalten; oder
b) über zumindest einen Bolzen, der zwei Kettensegmente des Kettenteilabschnitts der Transportkettenanordnung miteinander verbindet, mittelbar am Kluppenwagen und insbesondere am Kluppenkörper gehalten und/oder damit verbunden.

Das unmittelbare Halten kann z.B. dadurch erfolgen, dass die Führungseinrichtung an dem Kluppenwagen gelagert ist. Dies könnte über einen Bolzen erfolgen, der drehfest mit dem Kluppenwagen verbunden, insbesondere verschraubt oder verschweißt ist. An diesem Bolzen wäre dann die Führungseinrichtung gelagert.

Das mittelbare Halten kann z.B. dadurch erfolgen, dass der Bolzen, der zwei Kettensegmente des Kettenteilabschnitts verbindet selbst an dem Kluppenwagen (drehbar) gelagert ist und gegenüber diesem teilweise beweglich ist. Er könnte z.B. in einer Öffnung der Befestigungseinrichtung des Kluppenwagens eingesetzt und schraubenfrei in dieser gehalten sein. Die beiden Kettensegmente befinden sich dabei vorzugsweise unmittelbar neben dem Kluppenwagen. Insbesondere ist der Kluppenwagen parallel an diesen Kettensegmenten angeordnet. Der Bolzen könnte optional auch an einem Befestigungsabschnitt des Kluppenwagens angeordnet und mit diesem verschraubt sein. Optional könnte das mittelbare Halten auch dadurch erfolgen, dass die Führungseinrichtung an einem Bolzen, der zwei Kettensegmente des Kettenteilabschnitts der Transportkettenanordnung miteinander verbindet, gelagert ist, wobei ein anderer Bolzen, der benachbarte Kettenglieder miteinander verbindet mit dem Kluppenwagen verbunden oder an diesem gelagert ist. In diesem Fall würde das mittelbare Halten über zwei Bolzen und mehrere Kettenglieder hinweg erfolgen.

Erfindungsgemäß können die Anlagekräfte die erfindungsgemäße Konstruktion exakt und sehr flexibel auf die Anforderungen des Systems (insbesondere Anlagengeschwindigkeit und Anlagenlänge) angepasst werden.

Dabei eignet sich die erfindungsgemäße Lösung für alle derartigen Vorrichtungen zum Transport von bewegten Materialbahnen unter Verwendung von Kluppen, die längs von Führungsschienenanordnungen mittels Kettenantriebssystemen angetrieben werden. Auch dies gilt unabhängig davon, ob die einzelnen Kluppenwagen über separate Kettenglieder miteinander verbunden sind (so dass der Kraftfluss der angetriebenen Kettenanordnung über die einzelnen Kluppenwagen hinweg verläuft), oder ob eine durchgängige Kettenanordnung verwendet wird, bei der die Kluppen als separates Bauteil auf der Kette montiert sind und nicht im Kraftfluss des Kettenlängszuges liegen.

Dabei kann die erfindungsgemäße Lösung realisiert werden, wenn beispielsweise eine Mono-Schiene als Führungsschiene verwendet wird, aber auch dann, wenn zwei übereinander versetzt liegende Führungsschienenabschnitte nach Art einer Duo-Schiene zum Einsatz gelangen, an denen die erläuterten Laufrollen oder Gleitelemente der Kluppenwagen eingreifen und längs bewegbar sind.

Die Erfindung wird nachfolgend anhand von Zeichnungen näher erläutert. Dabei zeigen im Einzelnen:
- Figur 1:: eine schematische Draufsicht auf eine Querreckanlage;
- Figur 2:: eine perspektivische Darstellung einer Führungsschiene nach Art einer Mono-Führungsschiene;
- Figur 3:: eine ausschnittsweise Darstellung einer Reckanlage mit einem Kettentransportsystem und einem Kluppenwagen vor der anhand von Figur 2 gezeigten Führungsschiene;
- Figur 4:: eine vertikale Querschnittsdarstellung durch die in Figuren 2 und 3 gezeigte Führungsschiene mit dem darauf auf dem Kettensystem verfahrbaren Kluppenwagen;
- Figur 5:: eine schematische Draufsicht auf einen Horizontalschnitt durch einen Kluppenwagen auf zugehöriger Führungsschiene;
- Figur 6:: eine auszugsweise räumliche Darstellung einer erfindungsgemäß gelagerten und verschwenkbaren Stabilisierungsrolle;
- Figur 7:: eine zu Figur 6 ähnliche Darstellung, bei der die verschwenkbar gelagerte Stabilisierungsrolle im unteren Teil des Kluppenwagens in eingebauter Position gezeigt ist;
- Figur 8:: eine zu Figur 2 abweichende Ausgestaltung einer Führungsschiene unter Ausbildung zweier Führungsschienenabschnitte;
- Figur 9:: eine zu Figur 3 abweichende Darstellung einer erfindungsgemäßen Lösung im Falle einer entsprechend Figur 7 zweigeteilten Führungsschienenanordnung;
- Figur 10:: eine Anordnung, bei welcher die Stabilisierungsrolle am Kettensystem angeordnet ist;
- Figur 11:: die Anordnung aus Figur 10 in einer anderen Perspektive;
- Figur 12:: eine Anordnung, bei welcher die Stabilisierungsrolle über einen Schwenkhebel am Kettensystem angeordnet ist, wobei der Drehpunkt des Schwenkhebels konzentrisch zu einem Kettenbolzen ist;
- Figur 13:: eine geschnittene Darstellung durch eine Anordnung, bei welcher eine erste Stabilisierungsrolle auf der filmzugewandten Seite und eine zweite Stabilisierungsrolle auf der filmabseitigen Seite angeordnet ist; und
- Figur 14:: eine räumliche Darstellung der Anordnung aus Figur 13.

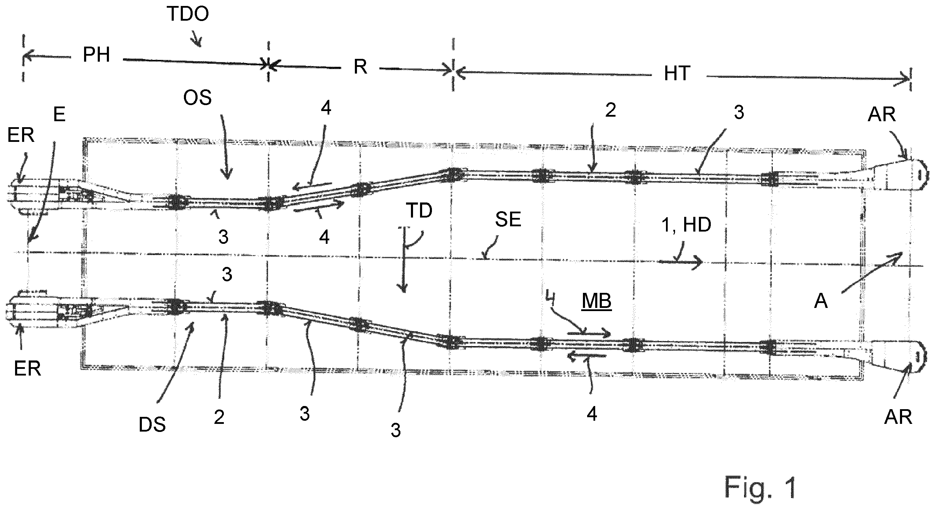

Nachfolgend wird auf Figur 1 Bezug genommen, in der beispielhaft eine Querreckanlage gezeigt ist, bei welcher die Erfindung umgesetzt werden kann.

Die nachfolgend beschriebene Folien-Breit- oder Quer-Reckanlage, die nachfolgend auch kurz als TDO-Reckanlage (TDO = Transverse Direction Orienter) bezeichnet wird, weist bekanntermaßen zwei in der Regel symmetrisch ausgebildete Antriebssysteme auf. In Figur 1 sind die beiden vertikal in der Zeichen-Ebene verlaufenden und symmetrisch zur Symmetrie-Ebene SE angeordneten Antriebssysteme eingezeichnet, wobei zwischen den beiden auf geschlossenen Führungsbahnen 2 umlaufenden Antriebssystemen die zu behandelnde, d.h. zu reckende Materialbahn insbesondere in Form eines Kunststofffilms MB (Materialbahn) längs der Abzugsrichtung 1 in Maschinenrichtung MD (MD = Machine Direction) hindurch bewegt wird. Die erläuterte TDO-Reckanlage kann dabei auch Teil einer sequentiellen Reckanlage sein, die üblicherweise eine der Querreckanlage (Querreckrahmen) vorgelagerte Längsreckstufe umfasst (im Zweifelsfall kann diese Längsreckstufe der Querreckstufe aber auch nachgeordnet sein).

Ein monoaxialer oder uniaxialer Film MB (wenn also eine Längsreckanlage der gezeigten Querreckanlage vorgelagert ist) oder ein unverstreckter Film MB (wobei im Folgenden von einem Film oder einer Folie gesprochen wird, obgleich mit einer derartigen Reckanlage allgemein eine Behandlungsbahn MB entsprechend behandelt und quergereckt werden kann, so dass die Erfindung insoweit nicht auf eine Kunststofffolienbahn beschränkt ist sondern auch zum Recken bzw. Strecken anderer bahnförmiger Materialien bzw. Materialbahnen verwendet werden kann, wie z.B. Metallfolien, Netze, Gewebebahnen etc.) läuft im Einlaufbereich E in die Reckanlage ein und wird dort von Kluppen an beiden seitlichen Rändern ergriffen und eingeklemmt, und zwar auf der sog. Operator-Seite (OS - operator side) sowie der sog. antriebsseitigen Drive-Seite (DS - drive side). Die Folie MB wird dann in einer nachfolgenden Vorheizzone PH erwärmt und danach einer Reckzone R zugeführt, um den Film MB hier in Querrichtung TD zu recken. Anschließend durchläuft der gereckte Film MB verschiedene Wärmebehandlungszonen HT, bei denen auch eine Relaxation des Filmes erfolgen kann. Am Ende der Reckanlage in der sogenannten Auslaufzone A wird der Film durch geeignete Mittel ausgekluppt und verlässt dann die Querreckmaschine, also die Querreckanlage.

Auf den beiden umlaufenden Bahnen 2 wird also jeweils ein Transportsystem 3 in Umlaufrichtung 4 angetrieben, wozu die beiden Transportsysteme eine Vielzahl von Kluppen-Transporteinheiten KT umfassen.

In Figur 1 ist ferner im Auslaufbereich A ein Auslaufrad AR für jede geschlossene umlaufende Führungsbahn 2 und im Eingangsbereich E ein Einlaufrad ER für jede Führungsbahn dargestellt. Das umlaufende Transportsystem 3 wird über das angetriebene Auslaufrad AR angetrieben, wobei das Eingangsrad ER eventuell zusätzlich mit Teillast angetrieben werden kann.

Grundsätzlich kann die nachfolgend noch erörterte erfindungsgemäße Lösung aber auch bei mechanischen Simultanreckanlagen eingesetzt werden.

Auch bei den vorbekannten mechanischen Simultanreckanlagen stützen sich die Kluppen-Transporteinheiten (also die sog. Kluppenwagen) über auf horizontalen wie vertikalen Achsen drehenden Rollen an der Ober- wie der Unterseite wie aber auch an den beiden in Horizontalrichtung gegenüberliegenden Vertikalseiten einer Führungs- und Gewichtsaufnahmeschiene ab. Daneben besteht noch eine Steuerschiene, worüber über Kettenscherenglieder eines sog. Scherengitters (Pantograf) der Abstand der Kluppen bzw. Transporteinheiten zueinander im Bereich der divergierenden Simultanzone in Maschinenrichtung (MD) unterschiedlich eingestellt werden kann. Bekanntermaßen werden in diesem Reckbereich bei Simultanreckanlagen die Transporteinheiten und damit die darauf sitzenden Kluppen zunehmend schneller beschleunigt, so dass der Abstand zwischen aufeinanderfolgenden Kluppen zunehmend größer wird, um gleichzeitig eine Längs- bzw. und Querreckung des Kunststofffolienfilms zu bewirken. Es wird insoweit nur beispielhaft auf die DE 37 41 582 A1, die WO 2004/71748 A1 oder die US 5 970 589 verweisen.

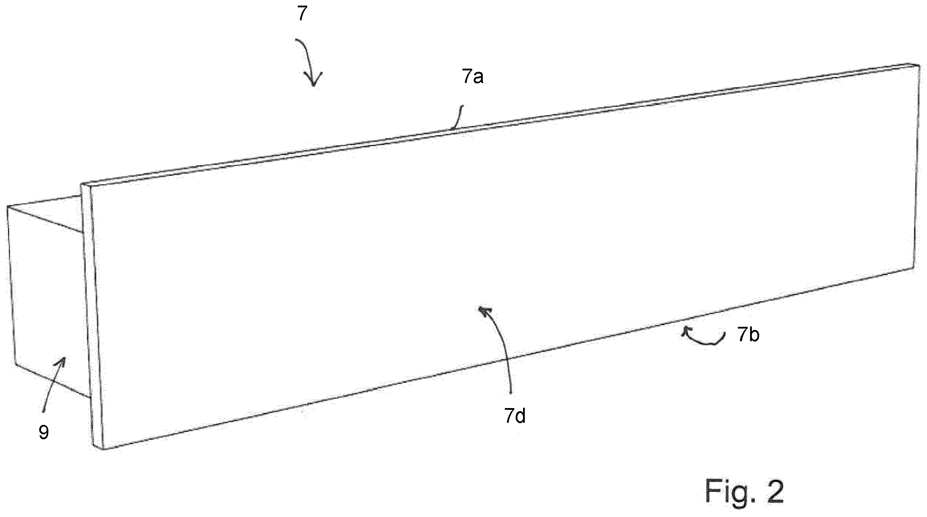

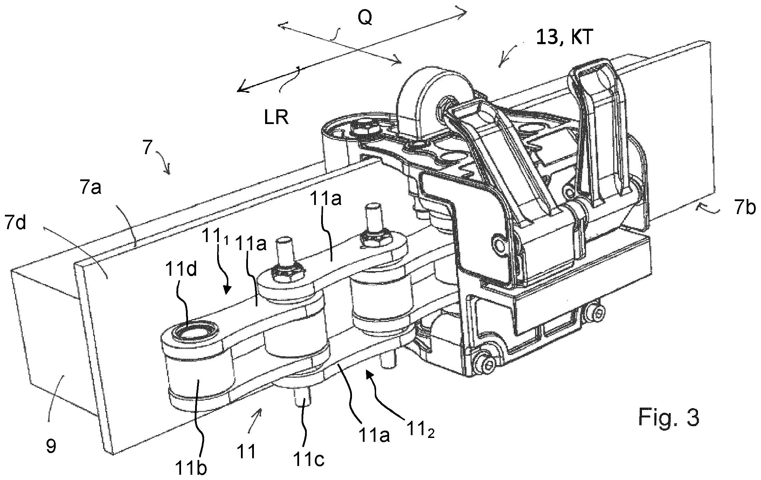

Anhand von Figur 2 ist nunmehr in grundsätzlicher perspektivischer Darstellung eine übliche Führungsschiene 7 der Führungsschienenanordnung 7 gezeigt, auf welcher die Kluppen-Transportsysteme KT, die nachfolgend auch kurz als Kluppenwagen 13 (siehe Figur 3) bezeichnet werden, verfahrbar geführt sind. Eine derartige Führungsschiene 7 ist üblicherweise auf der filmabgewandten Seite, also der sog. Rückseite der Führungsschiene 7 über eine in Figur 2 nur grundsätzlich und abstrakt angedeutete Trageinrichtung 9 gehalten.

In Figur 3 ist ein entsprechender Ausschnitt einer Führungsbahn 2 mit der schon erwähnten Führungsschiene 7 gezeigt, an welcher zusätzlich noch ein Ausschnitt eines Kettensystems 11 als umlaufendes Transportsystem 3 dargestellt ist, und zwar zusammen mit einem auszugsweise wiedergegebenen Kluppenwagen 13 als Kluppentransporteinheit KT.

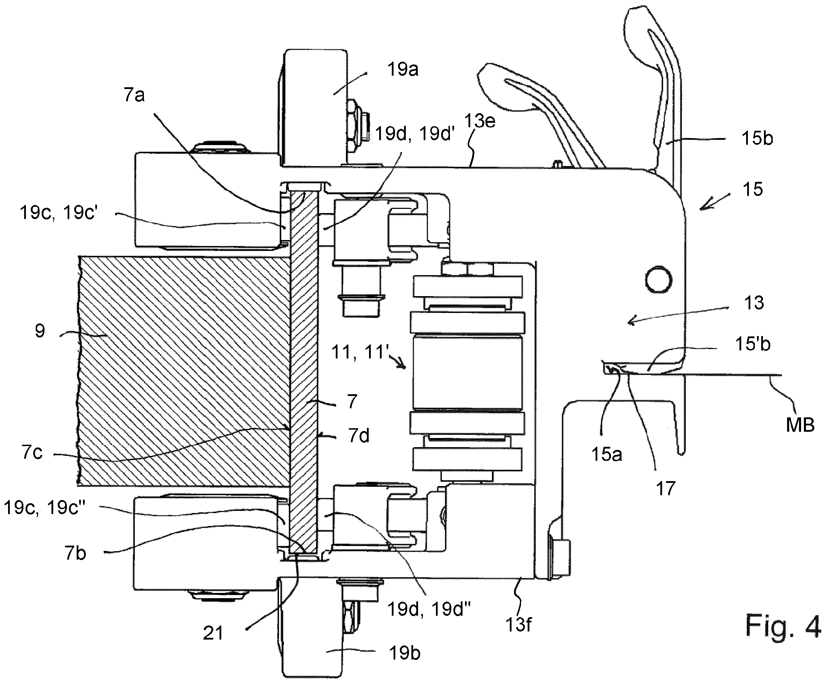

Anhand von Figur 4 ist zu der Darstellung gemäß Figur 3 ein Querschnitt senkrecht zur Ebene der Führungsschiene wiedergegeben, und zwar unter Draufsicht auf einen Kluppenwagen 13.

Insbesondere aus der Darstellung gemäß Figuren 3 und 4 lässt sich dabei der nachfolgende Aufbau entnehmen:
Die Führungsschiene 7 weist eine obere Lastschienenfläche 7a auf, die in der Regel horizontal ausgerichtet ist und nach oben weist. Dazu gegenüberliegend weist die Führungsschiene 7 eine nach unten weisende Gegenschienenfläche 7b auf. Diese ist vorzugsweise ebenfalls horizontal ausgerichtet und verläuft parallel zur oberen Lastschienenfläche 7a.

Ferner weist die im Querschnitt vorzugsweise rechteckförmige Führungsschiene 7 zwei in der Regel vertikal verlaufende Lauf- oder Gleitflächen 7c, 7d auf. Hierbei handelt es sich um eine filmabgewandte bzw. filmabseitige Lauf- oder Gleitfläche 7c und eine filmseitige Lauf- und/oder Gleitfläche 7d. Wie in den Figuren gezeigt ist die Kluppe 15 am Kluppenwagen 13 auf der Filmseite angeordnet (kann aber auch als ein Teil mit dem Kluppenwagen 13 ausgebildet sein), um dort beispielsweise einen Filmrand 17 eines Films MB oder einer Materialbahn MB zwischen einem Kluppentisch 15a und einem unteren Klemmabschnitt 15'b eines Kluppenhebels 15b eingespannt zu halten. Die hierüber auf den Kluppenwagen 13 eingeleiteten Folien- und/oder Recckräfte werden dann vor allem über filmabseitige Laufrollen 19c oder filmabseitige Gleitelemente 19c an der filmabgewandten bzw. filmabseitigen Lauf- und/oder Gleitfläche 7c abgestützt.

Die Laufrollen 19c bzw. Gleitelemente 19c umfassen insbesondere zumindest eine obere Laufrolle 19c' bzw. ein oberes Gleitelement 19c' und zumindest eine untere Laufrolle 19c" bzw. unteres Gleitelement 19c". Die zumindest eine obere Laufrolle 19c' bzw. das zumindest eine obere Gleitelement 19c' ist näher an der oberen Lastschienenfläche 7a angeordnet bzw. anordenbar als die zumindest eine untere Laufrolle 19c" bzw. das zumindest eine untere Gleitelement 19c". Dagegen ist die zumindest eine untere Laufrolle 19c" bzw. das zumindest eine untere Gleitelement 19c" näher an der Gegenschienenfläche 7b angeordnet bzw. anordenbar als die zumindest eine obere Laufrolle 19c' bzw. das zumindest eine obere Gleitelement 19c'. Vorzugsweise gibt es zwei obere Laufrollen 19c' und zwei untere Laufrollen 19c" bzw. Gleitelemente 19c', 19c". Diese wären dann insbesondere lediglich in Längsrichtung und bevorzugt nicht in Höhenrichtung des Kluppenwagens 13 voreinander beabstandet.

Des Weiteren sind im gezeigten Ausführungsbeispiel grundsätzlich ein oder mehrere in Richtung der Führungsschiene versetzt liegende obere Gewichtsrollen 19a und/oder obere Gewichtsgleitelemente 19a vorgesehen, über die das Gewicht, d.h. die Gewichtskraft des jeweiligen Kluppenwagens 13 an der Führungsschiene 7 abgestützt wird. Von daher werden das oder die oberen Gewichtsrollen 19a auch als Last- oder Gewichtsräder oder -rollen bezeichnet. Im Falle von Gewichtsgleitelementen könnte man auch von Lastgleitelementen sprechen.

Die demgegenüber unten liegende zumindest eine Sicherungsrolle 19b oder das zumindest eine Sicherungs-Gleitelement 19b ist zur Erzielung einer Formschlusssicherung gegen ein unbeabsichtigtes und unerwünschtes Aufsteigen der Transporteinheit KT so am Kluppenwagen 13 montiert, dass zwischen der betreffenden zumindest einen Sicherungsrolle 19b bzw. dem betreffenden zumindest einen Sicherungs-Gleitelement 19b und der nach unten weisenden Gegenschienenfläche 7b ein möglicherweise geringer und dabei bevorzugt definierter und fester Abstand 21 ausgebildet ist. Die Laufrollen 19c, 19c', 19c" und/oder die Gewichtsrolle 19a und/oder die Sicherungsrolle 19b in Figur 4 sind durch die Halte- und Lagerabschnitte des Kluppenwagens 13 teilweise abgedeckt und nur abschnittsweise zu sehen.

Auf der filmabgewandten Lauf- oder Gleitfläche 7c sind dann üblicherweise mehrere obere und/oder untere Laufrollen 19c, 19c', 19c" und/oder Gleitelemente 19c, 19c', 19c" angeordnet, die auf dieser Lauffläche abrollen oder gleiten und wie erwähnt die Kraft der Folie MB bzw. auch die Reckkraft mit aufnehmen.

Auf der gegenüberliegenden filmseitigen Lauf- oder Gleitfläche 7d ist bevorzugt zum einen eher dem oberen Rand der Führungsschiene 7 zugewandt liegend und zum anderen eher dem unteren Führungsschienenrand zugeordnet jeweils zumindest eine Stabilisierungsrolle 19d oder zumindest ein Stabilisierungs-Gleitelement 19d vorgesehen, welches nachfolgend noch näher erläutert wird.

Ansonsten sind in der Querschnittsdarstellung gemäß Figur 3 die entsprechenden Hülsen 11d und sonstigen Teile der parallel zur Führungsschiene 7 verlaufenden Transportkettenanordnung 11, also des Kettensystems 11 zu erkennen, worüber nacheinander folgend die einzelnen Kluppenwagen 13 miteinander verbunden sind.

Im Rahmen der Erfindung wird von einem Kettenteilabschnitt 11' gesprochen. Der Kettenteilabschnitt 11' ist ein Teil der Transportkettenanordnung 11. Es handelt sich bei dem Kettenteilabschnitt 11' um denjenigen Teil der Transportkettenanordnung 11, an dem der Kluppenwagen 13 angeordnet ist.

Der Kettenteilabschnitt 11' umfasst mehrere Kettensegmente 11₁, 11₂, wobei jedes Kettensegment 11₁, 11₂ an einem Ende mit einem benachbarten Kettensegment 11₁, 11₂ durch einen Bolzen 11c verbunden ist. Jedes Kettensegment 11₁, 11₂ umfasst zwei parallel zueinander beabstandete Kettenglieder 11a mit jeweils zwei Befestigungsöffnungen, die mit zwei anderen parallel zueinander beabstandeten Kettengliedern 11a eines anderen Kettensegments 11₁, 11₂ über den jeweiligen Bolzen 11c miteinander verbunden sind. Ein Abstandshalter 11b, insbesondere in Form einer Schonrolle, liegt zwischen den beiden innersten Kettengliedern 11a der jeweils miteinander verbundenen Kettensegmenten 11₁, 11₂ im Bereich ihrer Befestigungsöffnungen an, wobei der Bolzen 11c den Abstandshalter 11b durchsetzt.

Zwischen dem Bolzen 11c und dem Abstandshalter 11b ist insbesondere noch eine Hülse 11d vorgesehen, die im Bereich der Befestigungsöffnungen der beiden innersten Kettenglieder 11a endet und vorzugsweise bündig mit der Oberseite eines Kettenglieds 11a abschließt.

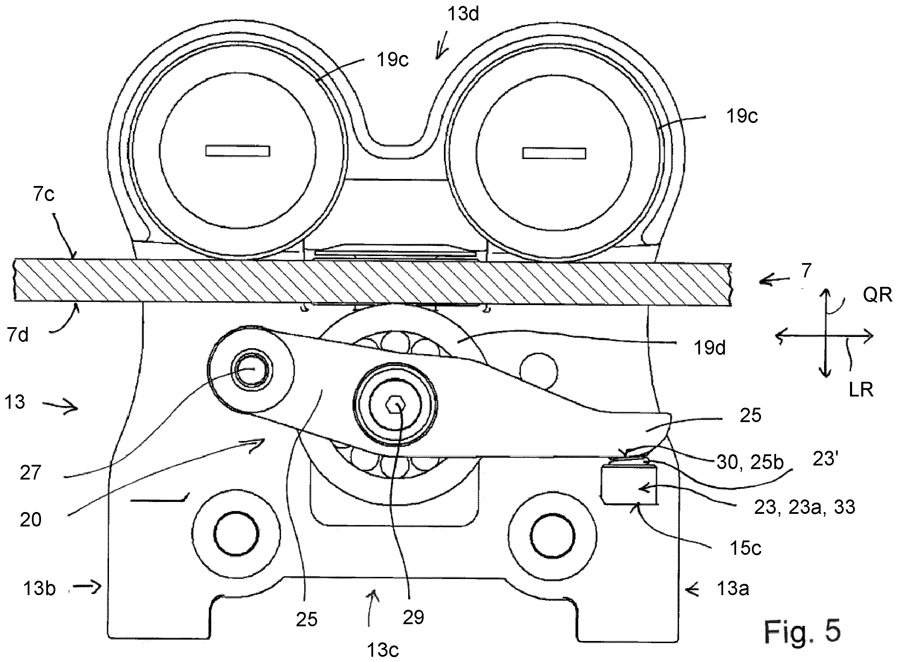

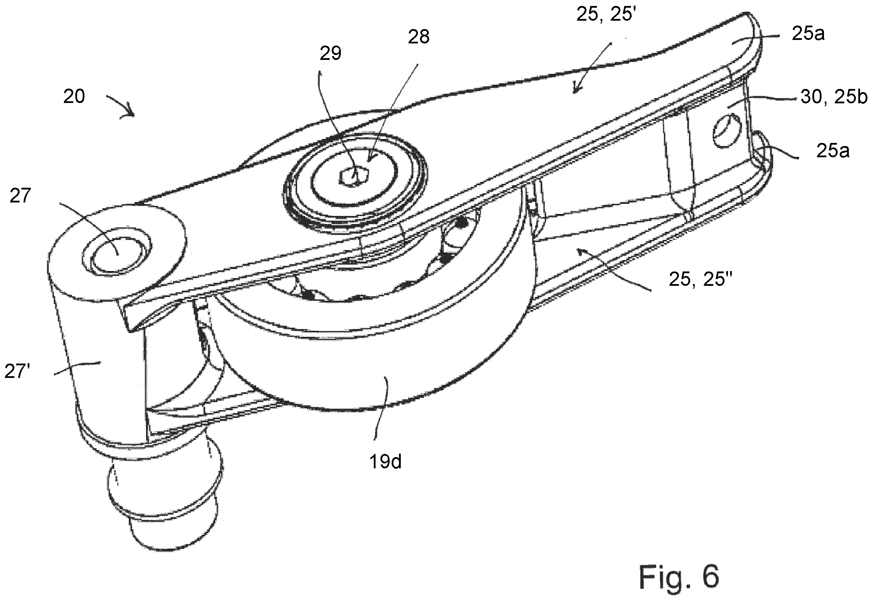

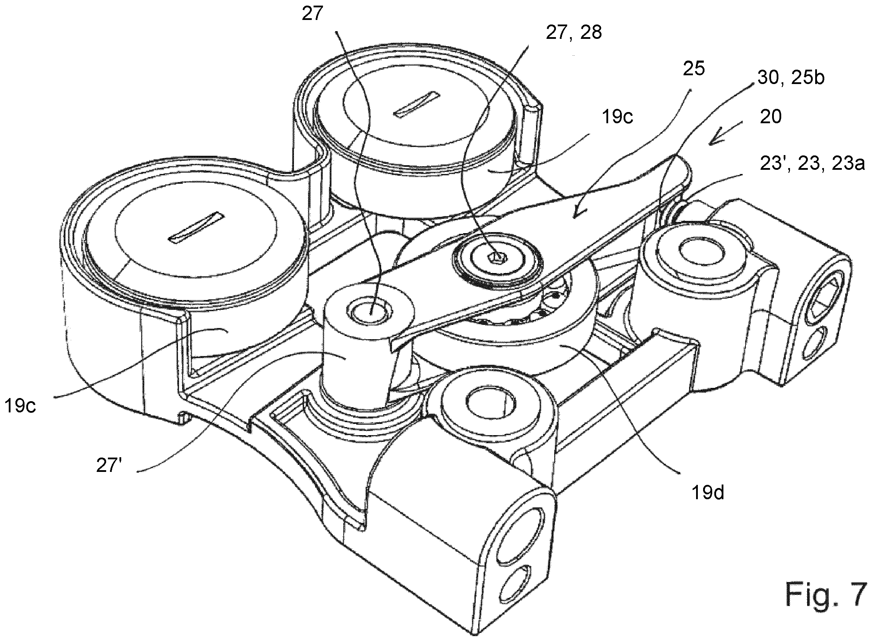

Anhand von Figur 5 ist nunmehr eine Draufsicht auf einen horizontalen Querschnitt durch die Führungsschiene 7 und den zugehörigen Kluppenwagen 13 unter Erläuterung des Aufbaus und der Anordnung der erfindungsgemäßen Stabilisierungsrolle 19d gezeigt, wobei anhand von Figur 6 eine auszugsweise räumliche Darstellung der Stabilisierungsrolle 19d und in Figur 7 deren Einbau am Kluppenwagen 13 ausschnittsweise wiedergegeben wird.

Aus den Darstellungen gemäß Figur 4 und folgenden lässt sich dabei der folgende Gesamtaufbau entnehmen.

Wie erwähnt sind die Kluppenwagen 13 zur Aufnahme der Hauptbelastung der Folienquerkraft und damit der Reckkraft auf der folienabgewandt liegenden Seite mit starren, d.h. keine federbelasteten Ausgleichsbewegungen zulassenden Laufrollen 19c ausgestattet, wobei diese Laufrollen 19c oder soweit vorgesehen die entsprechenden Gleitelemente 19c auf der filmabgewandten Fläche 7c der Führungsschiene 7 in Anlage gehalten sind.

Die gegenüber der oberen Gewichtsrolle 19a oder gegenüber dem Gewichtsgleitelement 19a auf der Unterseite 7b der Führungsschiene 7 vorgesehene Sicherungsrolle 19b oder ein eventuell dort vorgesehenes Sicherungs-Gleitelement 19b dient, wie erwähnt, nur zur Erzielung einer Formschlusssicherheit, damit die Transportkette gegen die Gewichtskraft bei Störfällen nicht aufsteigen kann. Da der Kontakt mit einer hier vorgesehenen Sicherungsrolle 19b oder ein Sicherungs-Gleitelement 19b auf der nach unten weisenden Gegenschienenfläche 7b nur für den vorstehend genannten Extremfall zur Sicherheit dient, kann dort der erwähnte Abstand 21 vorgesehen sein. Würde hier ein ständiger Kontakt zwischen der Gegenschienenfläche 7b und der Sicherungsrolle 19b oder dem Sicherungs-Gleitelement 19b (Gegengleitelement) bevorzugt werden, müsste hier diese Sicherungsrolle 19b oder das Sicherungs-Gleitelement 19b ebenfalls unter Ermöglichung einer Verstellbewegung auf diese nach unten weisende Gegenschienenfläche 7b zu und weg realisiert werden, wobei die Sicherungsrolle 19b oder das Sicherungs-Gleitelement 19b hier unter Einwirkung eines Federkraftspeichers auf die entsprechende nach unten weisende Gegenschienenfläche 7b zu vorgespannt sein sollte und müsste.

Ansonsten könnte als Alternative gegen ein Aufsteigen im gesamten System auch bezüglich der auf den seitlichen Führungsschienenflächen einwirkenden Laufrollen 19c ein Schräglauf voreingestellt werden, bei welchem die Drehachsen der Laufrollen 19c in Laufrichtung geneigt sind, um damit eine Abwärtskraftkomponente zu erzeugen.

Um nun die im Rahmen der Erfindung vorgesehene Stabilisierung eines entsprechenden Kluppenkörpers umzusetzen, sind pro Kluppenkörper zumindest eine Stabilisierungsrolle 19d, vorzugsweise zwei übereinander angeordnete (in Höhenrichtung beabstandete) Stabilisierungsrollen 19d', 19d" vorgesehen, die auf der filmzugewandten Führungsfläche 7d unter Einwirkung eines Kraftspeichers oder Kraftfederspeichers 23 zumindest mit einer Kraftkomponente auf diese Lauf- oder Gleitfläche 7d vorgespannt sind, um dadurch in Anlage mit dieser Lauf- oder Gleitfläche 7d gehalten zu werden. Dabei sind sie gegenüber dem sie tragenden Kluppenkörper bzw. Kluppenwagen 13 lageveränderlich montiert. Die Richtung der Federkraft könnte zudem variiert werden, sodass nicht nur die Stabilisierungsrolle 19, 19d', 19d" eine Querkraft erfährt, sondern ein Teil der Federkraft in oder gegen die Laufrichtung der Kluppe auf die Führungseinrichtung 20 wirkt.

Da die Führungsschiene 7 üblicherweise eine die Rollenbreite deutlich übersteigende Laufflächenhöhe aufweist, sind bevorzugt zumindest die erwähnten beiden Stabilisierungsrollen 19d, 19d', 19d" vorgesehen, wobei die eine Stabilisierungsrolle 19d, 19d' näher zur oberen Lastschienenfläche 7a angeordnet ist, wohingegen die zumindest eine zweite Stabilisierungsrolle 19d, 19d" unterhalb dazu am Kluppenwagen 13 montiert und gehalten, d.h. vorgesehen ist, und zwar näher liegend zur nach unten weisenden Lauffläche 7b.

Die im gezeigten Ausführungsbeispiel gemäß Figur 4 vorgesehene unten liegende Sicherungsrolle 19b kann gegebenenfalls auch beweglich aufgehängt, abgestützt und gelagert sein, um ein mögliches Spiel zwischen der Laufrollenfläche und der hier nach unten weisenden Gegenlauffläche 7b zu überbrücken bzw. zu vermeiden. Ebenso kann diese Sicherungsrolle 19b fest verankert oder aufgehängt sein, um Prozesskräfte dadurch aufzunehmen.

Im gezeigten Ausführungsbeispiel ist dabei die Stabilisierungsrolle 19d auf einem Schwenkhebel 25 drehbar gelagert, wobei der Schwenkhebel 25 um eine Hebelachse 27 gegenüber dem Kluppenwagen 13 verschwenkbar ist. Dabei ist die Rotationsachse 29 der Stabilisierungsrolle 19d parallel zur Hebelachse 27 und dabei parallel zur Führungsschiene 7 und insbesondere der filmseitigen Führungsschienenfläche 7d verlaufend ausgerichtet. Mit anderen Worten sind diese Drehachsen somit auch parallel zu den an der gegenüberliegenden Lauffläche 7c abrollenden starren Laufrollen 19c, 19c', 19c" ausgerichtet.

Im erläuterten Ausführungsbeispiel dient also der Schwenkhebel 25 als Führungseinrichtung 20, worüber die Bewegungsbahn der kraftbeaufschlagten Stabilisierungsrolle 19d (oder eines Stabilisierungs-Gleitelementes 19d) ermöglicht wird.

Dabei wird angemerkt, dass diese Ausrichtung der Achsen parallel zur Roll- oder Gleitfläche der Führungsschiene 7 dann gilt, wenn die Lauffläche der Stabilisierungsrolle 19d zylinderförmig ist. Sollte die Lauffläche konisch ausgebildet sein, würden die Hebelachse 27 und die Rotationsachse 29 parallel zur Zentralachse durch die konische Lauffläche der Stabilisierungsrolle 19d verlaufen.

Im gezeigten Ausführungsbeispiel ist der einarmige Schwenkhebel 25 so ausgebildet, dass er ein von der Hebelachse 27 ausgehendes und über die, an einer z.B. mittleren Halteposition 28 vorgesehenen Rotationsachse 29 (an welcher die Stabilisierungsrolle 19d frei drehbar gehalten und montiert ist) überstehendes Hebelende 25a aufweist, an welchem an einer Angriffsstelle 30 noch eine Federeinrichtung 23a als Druckfedereinrichtung oder allgemein als Kraftfederspeicher 23 angreift, die an einem gegenüberliegenden kluppenseitigen Anschlag 15c abgestützt ist. In Figur 5 ragt die Feder 23' nur teilweise aus einer Federhalterung oder -aufnahme heraus und ist von daher kaum sichtbar. Dadurch ist bevorzugt in einer vorwählbaren oder voreinstellbaren Kraftbeaufschlagung der Schwenkhebel 25 in Richtung der filmseitigen Lauffläche 7d vorgespannt, wobei mit entsprechender Hebelübersetzung dann die entsprechenden Kräfte die erwähnte Stabilisierungsrolle 19d auf die filmseitige Lauffläche 7d angedrückt halten.

Wie insbesondere aus der räumlichen Darstellung gemäß Figur 6 und Figur 7 zu ersehen ist, ist der in diesem Ausführungsbeispiel einarmige Hebel 25 als Doppelhebel 25 ausgebildet, der einen oberen Hebelabschnitt 25' und einen dazu parallelen unteren Hebelabschnitt 25" umfasst, die in der Regel parallel zueinander verlaufen, also in einem gleichen Abstand zueinander und dabei in Draufsicht parallel zur Hebelachse 27 deckungsgleich ausgebildet sind. Am freien Hebelende 25a sind die beiden Hebelabschnitte 25' und 25" über ein durch den Kraft- oder Kraftfederspeicher 23 beaufschlagtes Verbindungselement 25b miteinander verbunden. Beide Hebelabschnitte 25' und 25" sind gegenüberliegend zu dem Verbindungsabschnitt 25b an der gemeinsamen Schwenkachse oder an einen die gemeinsame Schwenkachse bildenden Achskörper 27' angebunden. In dem so gebildeten Zwischenraum zwischen den beiden in Axialrichtung der Hebelachse 27 versetzt zueinander angeordneten Schwenkhebelabschnitten 25' und 25" ist dann die erwähnte Stabilisierungsrolle 19d gelagert, wobei die Drehachse an den beiden versetzt zueinander liegenden Schwenkhebelabschnitten 25' und 25" gehalten und verankert ist.

Der geschilderte Aufbau bewirkt ein stabiles Gleichgewicht aufgrund der nach Art eines Dreiecks gebildeten Angriffspunkte für die Hebelanbindung, d.h. die Anbindung des Schwenkhebels 25 an dessen Hebelachse 27, dem Ansatzpunkt der Federung 23a und der Kontaktstelle der Stabilisierungsrolle 19d auf der zugehörigen Lauffläche 7d der Führungsschiene 7. Zudem sind in Draufsicht die beiden filmabseitigen Laufrollen 19c, 19c', 19c" und die filmseitige Stabilisierungsrolle 19d ebenfalls dreieckförmig zueinander angeordnet, wodurch sich eine optimale Stabilisierung ergibt.

Darüber hinaus führt diese erläuterte Anordnung zu dem Ergebnis, dass der Reibewert der Lagerung einen sehr geringen Einfluss auf die Anpress- und damit Stabilisierungskräfte ausübt.

Angemerkt werden soll allerdings, dass auch andere Hebelanordnungen möglich sind, bei denen der Drehpunkt des Hebels in der Mitte liegt, somit also ein zweiarmiger Hebel gebildet ist, bei welchem auf dem einen Hebelarm die entsprechende Stabilisierungsrolle 19d drehbar gelagert und auf dem gegenüberliegenden Hebelarm dann der Kraftspeicher 23 vorgesehen ist und auf den Schwenkhebel 25 einwirkt.

Schließlich soll auch erwähnt werden, dass nicht nur zwei übereinander angeordnete bevorzugt gefederte Stabilisierungsrollen 19d, 19d', 19d" vorgesehen sein können, sondern auch in Richtung der Führungsschiene versetzt liegend hintereinander beispielsweise zum einen eher oben und zum anderen eher unten liegend jeweils zwei bevorzugt gefederte und damit ausweichbar gehaltene Stabilisierungsrollen 19d vorgesehen sein können, so dass diese Stabilisierungsrollen 19d, 19d', 19d" nicht wie im gezeigten Ausführungsbeispiel nach Figur 5 etwa mittig zu den beiden auf der Gegenseite starr gelagerten Laufrollen 19c an der Laufschiene 7 angreifen, sondern jede der erwähnten Stabilisierungsrollen 19d, 19d', 19d" quasi gegenüberliegend zu den auf der anderen Seite vorgesehenen starren Laufrollen 19c, 19c', 19c" an der Führungsschiene 7 ansetzt.

Zudem sind auch weitere Lagerungen der Stabilisierungsrollen möglich. So ist es auch möglich, auf einen Schwenkhebel zu verzichten und anstelle dessen eine Führungseinrichtung 20 für die Stabilisierungsrolle 19d vorzusehen, die quer und insbesondere senkrecht oder zumindest mit einer Bewegungskomponente quer zur Führungsschiene 7 auf diese zu bzw. über eine gewisse Weglänge von dieser weg verstellbar ist, und zwar unter Einwirkung eines die Stabilisierungsrolle 19d in Richtung Führungsschiene 7 kraftbeaufschlagenden Kraftspeichers 23 oder Kraftspeicherfedereinrichtung.

Anstelle einer derartigen eher linearen Führungseinrichtung 20 zur Verstellung der kraftbeaufschlagten und insbesondere gefederten Stabilisierungsrolle 19d kann auch eine Anordnung verwendet werden, bei der die Stabilisierungsrolle 19d auf einer kippbaren Achse auf die Führungsschiene 7 zu, also zumindest über eine gewisse Wegstrecke von der Führungsschiene 7 weg und auf diese zu bewegbar ist (unter Kraftbeaufschlagung).

Schließlich soll auch noch erwähnt werden, dass neben der Federeinrichtung auch noch zusätzlich eine Dämpfungseinrichtung 33 vorgesehen sein kann, die bevorzugt parallel zum Federweg eingebaut ist oder zumindest mit einer Komponente parallel zum Federweg wirkt, um das Schwingungsverhalten der Stabilisierungsrolle zu optimieren. Im gezeigten Ausführungsbeispiel nach Figur 5 ist die erwähnte Dämpfungseinrichtung 33 zusammen mit der Federeinrichtung 23a beispielsweise in Form des Kraftspeichers oder Kraftfederspeichers 23 umgesetzt.

Wenn die erwähnte Kette 11 bzw. die erwähnten Kettenglieder starr mit dem jeweiligen Kluppenwagen 13 verbunden ist bzw. sind, könnte die Anbindung der Federung, d.h. die Abstützung des Kraftspeichers bzw. Kraftfederspeichers 23 nicht nur gegenüber einem Anschlag 15c am Kluppenwagen 13 selbst, sondern auch indirekt über die Kette 11 bzw. die Kettenglieder an der Kluppe erfolgen, weil hier die Ketten durch den Kraftfederspeicher gegenüber dem Kluppenwagen 13 keine Ausweichbewegung durchführen können.

Grundsätzlich können anstelle des erwähnten Kraftspeichers oder Kraftfederspeichers 23 vorzugsweise in Form einer Federeinrichtung 23a auch alle anderen geeigneten Federtypen verwendet werden. Beispielsweise kann für den Schwenkhebel 25 als federndes Element auch eine Blattfeder eingesetzt werden. Schließlich könnte der Schwenkhebel 25 sogar selbst als federndes Element ausgestaltet sein. Einschränkungen bestehen insoweit nicht.

Ferner wird angemerkt, dass anstelle der einen oder anderen erwähnten Stabilisierungsrolle 19d auch ein Stabilisierungs-Gleitelement 19d eingesetzt werden kann, welches beispielsweise an dem Schwenkhebel 25 starr so angebracht ist, dass es beim Aufsetzen auf die entsprechende filmseitige Lauf- oder Gleitfläche 7d parallel zu dieser aufsetzt. Ansonsten könnte ein entsprechendes flächiges Gleitelement am Schwenkhebel 25 auch mittels einer Schwenk- oder Kippachse 29 gehalten werden, derart, dass das Gleitelement zumindest um diese Schwenk- oder Kippachse 29 in einem gewissen ausreichenden Winkelmaß verschwenkbar ist. Damit wäre es dann möglich, dass sich das flächige Gleitelement jeweils vollflächig an der Lauf- oder Gleitfläche 7d der Führungsschiene selbsttätig ausrichten kann.

Hinsichtlich der Kluppe oder des Kluppenwagens 13, der teilweise auch Kluppenkörper 13 bezeichnet wird, soll ergänzend angemerkt werden, dass dieser eine in Bewegungsrichtung, also in Richtung der Führungsschiene 7 verlaufende Längsrichtung LR und eine senkrecht dazu verlaufende, also auch senkrecht zur Führungsschiene 7 verlaufende Querrichtung QR aufweist (also senkrecht zur filmseitigen Lauffläche 7d bzw. senkrecht zur filmabgewandten Lauffläche 7c). Somit verläuft also die Längsrichtung LR zwischen einer Vorlaufseite 13a (also in Bewegungsrichtung des Kluppenwagens 13 längs der Führungsschiene 7) und einer demgegenüber entgegen der Fahrtrichtung weisenden Nachlaufseite 13b. Die Querrichtung QR verläuft demgegegenüber senkrecht zur Längsrichtung LR zwischen einer seitlich dazu ausgerichteten Einspannseite 13c (die also filmseitig liegt und an der der Filmrand an der Kluppe 15 entsprechend eingespannt und gehalten wird) und einer zur reckenden Materialbahn MB gegenüberliegenden Führungsschienenseite 13d (siehe Figur 5). Die erwähnte jeweils eine oder gegebenenfalls beiden oder mehreren Stabilisierungsrollen 19d können dabei bevorzugt eher auf der Oberseite 13e des Kluppenwagens 13 und/oder eher auf der Unterseite 13f des Kluppenwagens 13 angeordnet sein, ohne dass dies zwingend ist.

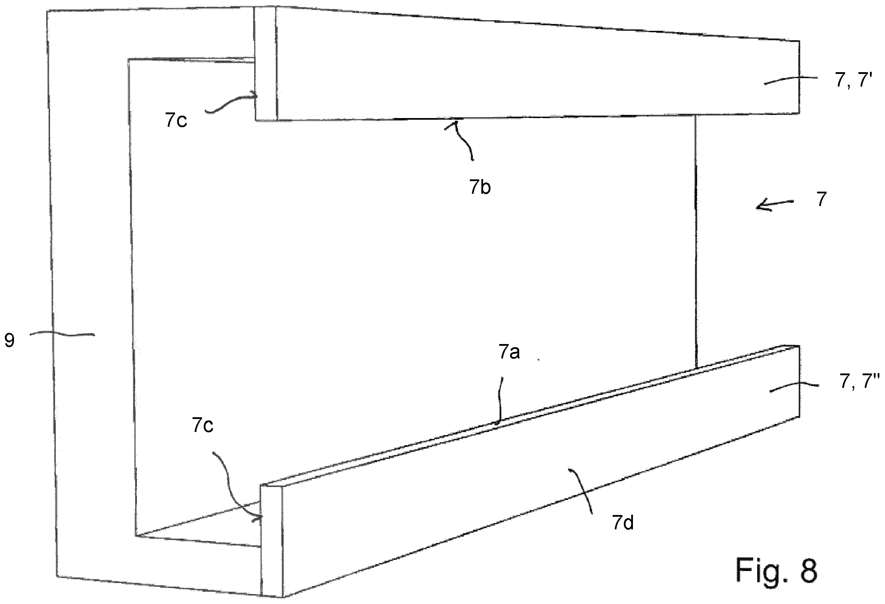

Ferner wird auch noch auf Figur 8 verwiesen, in der in Abweichung zu Figur 2 eine zwei Führungsschienenabschnitte 7' und 7" aufweisende Führungsschienenanordnung nach Art einer Duo-Führungsschiene gezeigt ist, wobei die beiden Führungsschienenabschnitte 7' und 7" vorzugsweise mit Vertikalversatz unter Ausbildung eines Führungsschienenabstandes 41 zwischen ihnen ausgebildet bzw. angeordnet sind. Die Führungsschienenabschnitte 7', 7" können wiederum über eine gemeinsame oder getrennte Trageinrichtung 9 gehalten werden.

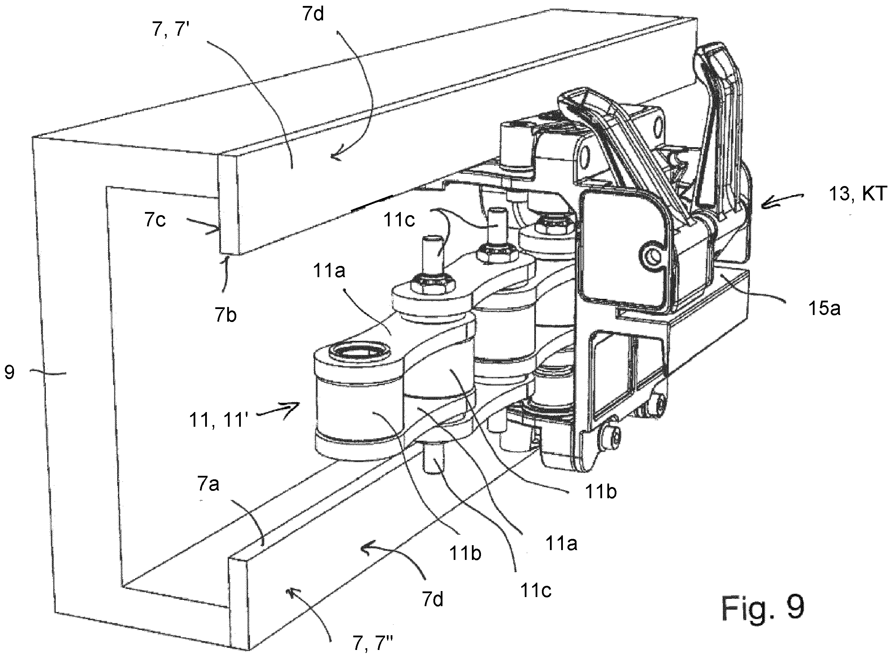

Auch bei einer derartigen Ausbildung der Führungsschiene 7 kann eine entsprechend angepasste Transportkettenanordnung 11 verfahren werden, wie dies beispielsweise nunmehr anhand von Figur 9 gezeigt ist.

Aufbau und Wirkungsweise entsprechen dabei grundsätzlich der beschriebenen Ausführungsform gemäß Figur 3. Der wesentliche Unterschied ist lediglich, dass die oberen rückwärtigen, also filmabgewandten Laufrollen 19c nicht die obere Lauffläche 7a (wie bei dem Ausführungsbeispiel nach Figur 3) übergreifen, sondern durch den Führungsschienenabstand 41 hindurch untergreifen, wohingegen die unteren auf der filmabgewandten Seite abrollenden Laufrollen 19c abweichend zu Figur 3 die dortige Mono-Führungsschiene 7 nicht untergreifen, sondern durch den Führungsschienenabstand 41 hindurch den unteren Führungsschienenabschnitt 7" übergreifen.

Die Funktionsweise ist also grundsätzlich vergleichbar dem vorausgegangenen Ausführungsbeispiel, wohingegen eine Funktionsvertauschung insofern eintritt, als die nach oben weisende Schienen- oder Lastschienenfläche 7a an dem unteren Führungsschienenabschnitt 7" und die nach unten weisende lediglich der Sicherung gegen ein Abheben des Kluppenkörpers bzw. des Kluppenwagens dienende LaufGegenschienenfläche 7b nunmehr an dem oberen Führungsschienenabschnitt 7' ausgebildet ist. Hier kann der im Zusammenhang mit Figur 4 beschriebene Abstand 21 zwischen der Sicherungsrolle 19b und der Gegenschienenfläche 7b vorgesehen sein. Auch bei dieser Variante können einzelne oder mehrere der erwähnten Rollen 19a, 19b, 19c und/oder 19d auch als Gleitelemente ausgebildet sein.

Bei dieser Variante können die zumindest beiden Sicherungsrollen 19d oder Sicherungs-Gleitelemente 19d zum Teil mit der entsprechenden Lauf- oder Gleitfläche 7d an dem oberen Führungsschienenabschnitt 7' und zum anderen Teil an dem unteren Führungsschienenabschnitt 7" anliegen und damit wechselwirken.

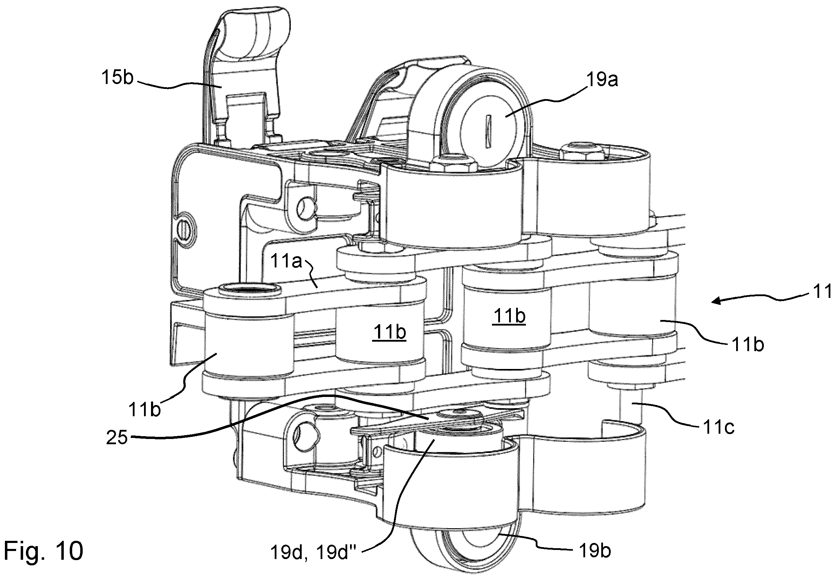

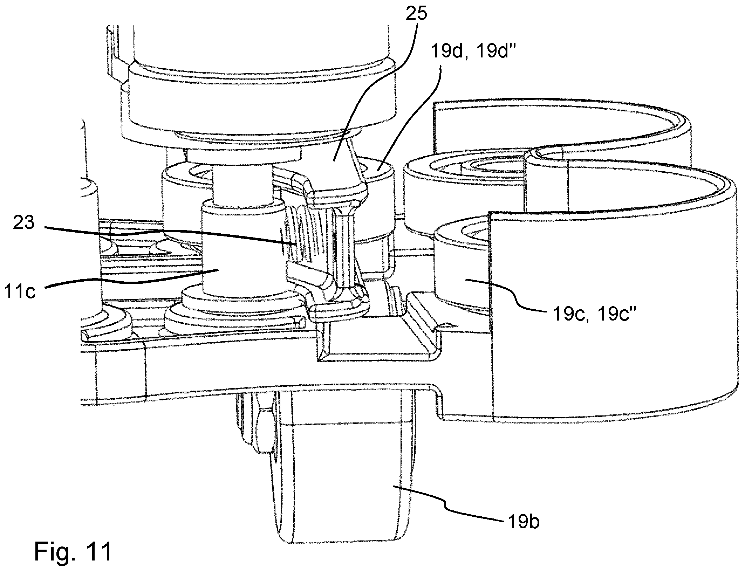

Ergänzend oder abweichend zu dem erläuterten Aufbau des Kluppenwagens 13 mit der erwähnten Führungseinrichtung 20 für die kraftbeaufschlagte Stabilisierungsrolle 19d, 19d', 19d" oder das kraftbeaufschlagte Stabilisierungs-Gleitelement 19d kann diese Führungseinrichtung 20 mit den zugehörigen erläuterten Bestandteilen insbesondere in Form der erwähnten Stabilisierungsrolle 19d, 19d', 19d" oder des erwähnten Stabilisierungs-Gleitelements 19d abweichend nicht unmittelbar an dem Kluppenwagen 13 selbst befestigt werden, sondern nur mittelbar. In diesem Fall ist die Stabilisierungsrolle 19d, 19d', 19d" oder das zumindest eine Stabilisierungs-Gleitelement 19d über den Bolzen 11c der Transportkettenvorrichtung 11, der zwei Kettensegmente 11₁, 11₂ des Kettenteilabschnitts 11' der Transportkettenanordnung 11 miteinander verbindet, mittelbar am Kluppenwagen 13 gehalten. Der Bolzen 11c ist bevorzugt fest mit einem Befestigungsabschnitt des Kluppenwagens 13 verbunden, insbesondere verschraubt. Der Bolzen 11c könnte auch lediglich in eine entsprechende Öffnung im Kluppenwagen 13 gesteckt und an diesem gelagert und gerade eben nicht verschraubt sein. Der Bolzen 11c kann daher auch als Teil des Kluppenwagens 13 angesehen werden. Darüber ist der Kluppenwagen 13 mit der Transportkettenanordnung 11 verbunden. Dieser Sachverhalt ist in den Figuren 10 und 11 dargestellt.

Dabei kann einer der erwähnten Bolzen 11c als Drehachse oder Hebelachse 27 für die Führungseinrichtung 20, d.h. den Schwenkhebel oder die Schwenkhebelanordnung 25 genutzt werden. Der anhand der vorausgegangenen Ausführungsbeispiele erwähnte Anschlag 15c des Kraftfederspeichers 23 könnte in diesem Fall am zweiten, also an einem benachbarten Bolzen 11c vorgesehen sein und damit indirekt an der gleichen Kluppe oder dem gleichen Kluppenwagen 13. Die Abstützung an dem Kettenteilabschnitt 11' ist bereits weiter oben erläutert worden.

Die Stabilisierungsrolle 19d, 19d', 19d" oder das zumindest eine Stabilisierungs-Gleitelement 19d könnte in Laufrichtung auch nicht mittig zum Kluppenkörper angeordnet werden, sondern zwischen den Kluppenkörpern. In diesem Fall wird für die Hebelachse 27 der Bolzen 11c der eine Kluppe verwendet und der zugewandte Bolzen 11c der benachbarten Kluppe als Anschlag 15c.

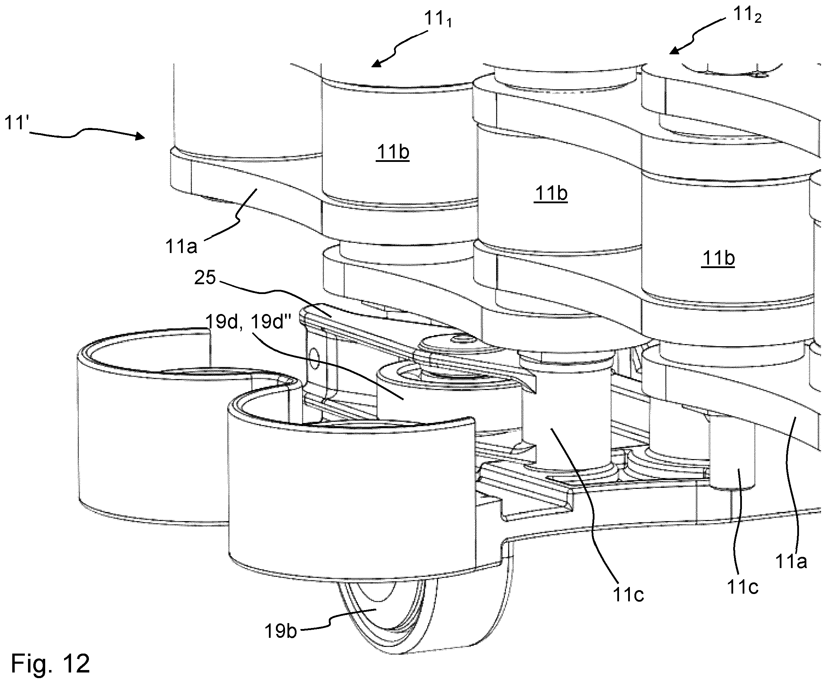

In Figur 12 ist der Schwenkhebel 25 in Form des Doppelschwenkhebels dargestellt. An der Schwenkachse ist der Doppelschwenkhebel sowohl an dem Kettenteilabschnitt 11' als auch am Kluppenwagen 13 gelagert angeordnet. Der Bolzen 11c durchsetzt dabei den Doppelschwenkhebel an seiner Schwenkachse.

Die vorstehend erläuterte Abwandlung ist insbesondere dann besonders günstig umsetzbar, wenn der erwähnte Kettenteilabschnitt 11' mit dem Kluppenwagen 13 fest verbunden ist.

Bevorzugt ist näher an der oberen Lastschienenfläche 7a als an der Gegenschienenfläche 7b ein Paar von in Richtung der Führungsschienenanordnung 7 versetzt liegenden Laufrollen 19c, 19c' und/oder Gleitelementen 19c an dem Kluppenwagen 13 angeordnet. Dagegen ist ein Paar von in Richtung der Führungsschienenanordnung 7 versetzt liegenden Laufrollen 19c, 19c" und/oder Gleitelementen 19c an dem Kluppenwagen 13 näher an der Gegenschienenfläche 7b angeordnet. Zwischen den Laufrollen 19c, 19c', 19c" und/oder Gleitelementen 19c des einen und/oder des andern Paars von Laufrollen 19c, 19c', 19c" und/oder Gleitelementen 19c ist auf der dazu gegenüberliegenden Seite der Führungsschienenanordnung 7 eine Stabilisierungsrolle 19d, 19d', 19d" oder ein Stabilisierungs-Gleitelement 19d am Kluppenwagen 13 vorgesehen. Die zumindest eine Stabilisierungsrolle 19d, 19d', 19d" oder das zumindest eine Stabilisierungs-Gleitelement 19d ist über die Führungseinrichtung 20 in Richtung der filmseitig angeordneten Lauf- und/oder Gleitfläche 7d verstellbar vorgespannt.

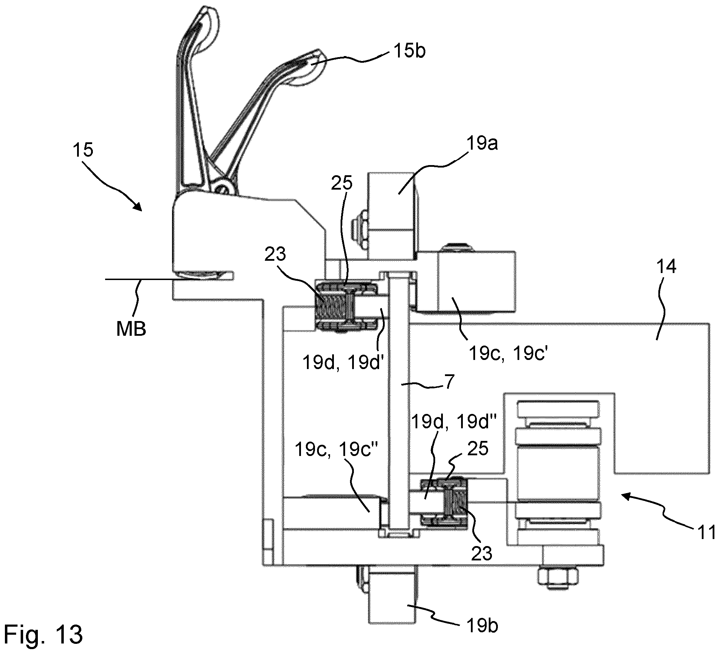

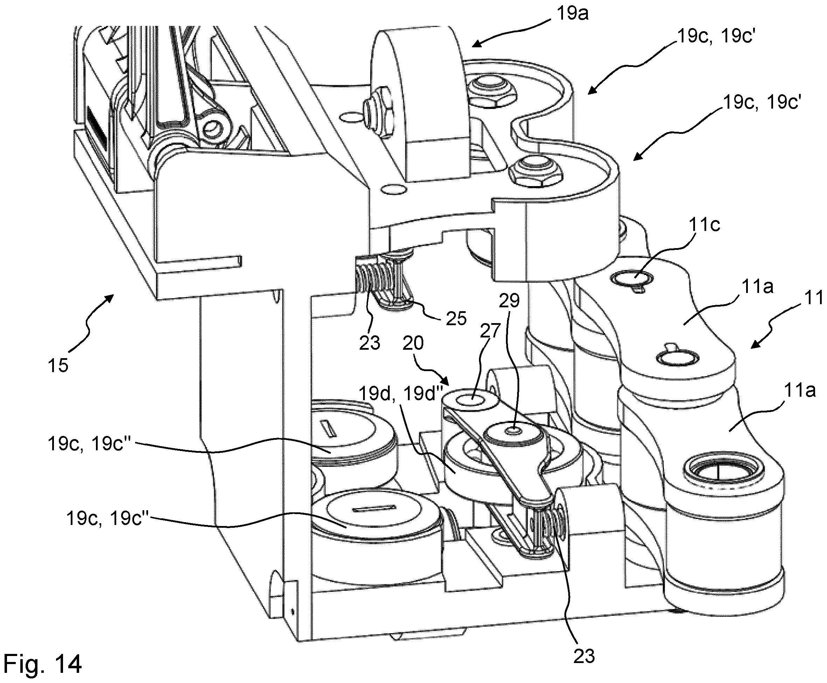

Gemäß den Figuren 13 und 14 ist es auch möglich, dass mehrere Stabilisierungsrollen 19d, 19d', 19d" eingesetzt werden, wobei jeweils zumindest eine Stabilisierungsrolle 19d, 19d', 19d" auf der filmzugewandten Seite und eine Stabilisierungsrolle 19d, 19d', 19d" auf der materialbahnabweisenden Seite angeordnet ist. Diese (zumindest zwei) Stabilisierungsrollen 19d, 19d', 19d" sind in Höhenrichtung versetzt zueinander angeordnet. Eine Stabilisierungsrolle 19d, 19d' ist näher an der oberen Lastschienenfläche 7a der Führungsschiene 7 der Führungsschienenanordnung 7 angeordnet als die andere Stabilisierungsrolle 19d, 19d" und die andere Stabilisierungsrolle 19d, 19d" ist näher an der, zur oberen Lastschienenfläche 7a gegenüber liegend angeordneten (unteren) Gegenschienenfläche 7b der Führungsschiene 7 angeordnet. In dem dargestellten Ausführungsbeispiel aus Figur 13 ist eine Stabilisierungsrolle 19d, 19d' im Bereich der Lastschienenfläche 7a der Führungsschiene 7 auf der filmzugewandten Seite der Führungsschiene 7 angeordnet. Dagegen ist die andere Stabilisierungsrolle 19d, 19d" im Bereich der Gegenschienenfläche 7b der Führungsschiene 7 auf der filmabseitigen Seite der Führungsschiene 7 angeordnet. Dies könnte auch umgekehrt sein. Vorzugsweise ist diejenige Stabilisierungsrolle 19d, 19d', 19d", die (näher) auf der Höhe der Materialbahn MB angeordnet ist, an der filmzugewandten Seite der Führungsschiene 7 angeordnet.

In diesem Fall sind auch die Laufrollen 19c, 19c', 19c" oder die Gleitelemente 19c sowohl auf der filmzugewandten Seite als auch auf der filmabseitigen Seite der Führungsschiene 7 angeordnet. Die jeweilige eine Laufrolle 19c, 19c', 19c" oder ein Paar von Laufrollen 19c, 19c', 19c" bzw. Gleitelementen 19c ist ungefähr (Abweisung weniger als +-20%) auf Höhe der jeweiligen Stabilisierungsrolle 19d, 19d', 19d", allerdings auf der anderen Seite der Führungsschiene 7, angeordnet. Ein Versatz in Längsrichtung LR des Kluppenwagens 13 ist möglich. Zwischen Laufrolle 19c, 19c', 19c" und dazu korrespondierender Stabilisierungsrolle 19d, 19d', 19d" bzw. Stabilisierungs-Gleitelement 19d verläuft die Führungsschiene 7. In dem Ausführungsbeispiel aus Figur 13 ist die Laufrolle 19c, 19c' oder das Paar von Laufrollen 19c, 19c' bzw. Gleitelementen 19c, das im Bereich der Lastschienenfläche 7a der Führungsschiene 7 angeordnet ist, auf der filmabseitigen Seite der Führungsschiene 7 angeordnet. Dagegen ist die Laufrolle 19c, 19c" oder das Paar von Laufrollen 19c, 19c" bzw. Gleitelementen 19c, das im Bereich der Gegenschienenfläche 7b der Führungsschiene 7 angeordnet ist, auf der filmzugewandten Seite der Führungsschiene 7 angeordnet. Dies könnte auch umgekehrt sein. Vorzugsweise ist diejenige Laufrolle 19c, 19c' oder das Paar von Laufrollen 19c, 19c' bzw. Gleitelementen 19c, die (näher) auf der Höhe der Materialbahn MB angeordnet ist an der filmabseitigen Seite der Führungsschiene 7 angeordnet.

Grundsätzlich könnten aber auch alle Stabilisierungsrollen 19d, 19d', 19d" auf der filmzugewandten Seite oder der filmabseitigen Seite der Führungsschiene 7 angeordnet sein, wohingegen alle Laufrollen 19c, 19c', 19c" bzw. Gleitelemente 19c auf der entgegengesetzten Seite der Führungsschiene 7 angeordnet sind. Diese könnten dann auf der filmabseitigen Seite der Führungsschiene 7 oder der filmzugewandten Seite der Führungsschiene 7 angeordnet sein.

Der Kluppenwagen 13 umfasst weiterhin einen oberen Abschnitt und einen unteren Abschnitt, die von einem oberen und einem unteren Teil des Kluppenkörpers 13 abstehen und dazu ausgebildet sind, die Führungsschienenanordnung 7 zu umgreifen. Die obere Führungsrolle 19c, 19c' ist dabei bevorzugt an dem oberen Abschnitt angeordnet und die untere Führungsrolle 19c, 19c" an dem unteren Abschnitt. Auch die Stabilisierungsrollen 19d, 19d', 19d" sind einerseits bevorzugt an dem oberen Abschnitt und andererseits an dem unteren Abschnitt angeordnet.

Die Erfindung ist nicht auf die beschriebenen Ausführungsbeispiele beschränkt. Im Rahmen der Erfindung sind alle beschriebenen und/oder gezeichneten Merkmale beliebig miteinander kombinierbar.

## Patentansprüche

1. Kluppenwagen (13) für eine Reckanlage, mit folgenden Merkmalen:
- der Kluppenwagen (13) weist eine Längsrichtung (LR) und eine Querrichtung (QR) auf,
a. wobei die Längsrichtung (LR) zwischen einer Vorlaufseite (13a) und einer dazu gegenüberliegenden Nachlaufseite (13b) verläuft; und
b. wobei die Querrichtung (QR) quer oder senkrecht zur Längsrichtung (LR) zwischen einer seitlich dazu ausgerichtete Einspannseite (13c) für eine zu reckende Materialbahn (MB) und einer dazu gegenüberliegenden Führungsschienenseite (13d) verläuft;
- der Kluppenwagen (13) umfasst einen Kluppenkörper, wobei der Kluppenkörper (13) eine Klemmeinrichtung aufweist, worüber ein Materialbahnrand (17) einer zu reckenden Materialbahn (MB) festklemmbar ist;
- der Kluppenwagen (13) umfasst Befestigungsabschnitte, um diesen an einem Kettenteilabschnitt (11') einer Transportkettenanordnung der Reckanlage zu befestigen;
- der Kluppenwagen (13) umfasst zumindest eine Stabilisierungsrolle (19d, 19d', 19d") oder zumindest ein Stabilisierungs-Gleitelement (19d, 19d', 19d'');
**gekennzeichnet durch** die folgenden Merkmale:
- die zumindest eine Stabilisierungsrolle (19d, 19d', 19d") oder das zumindest eine Stabilisierungs-Gleitelement (19d, 19d', 19d") ist mittels einer Führungseinrichtung (20):
a) unmittelbar am Kluppenwagen (13) gehalten; oder
b) über einen Bolzen (11c), der zwei Kettensegmente (11₁, 11₂) des Kettenteilabschnitts (11') der Transportkettenanordnung (11) miteinander verbindet, mittelbar am Kluppenwagen (13) gehalten und/oder verbunden;
und zwar unbeeinflusst von an dem Kluppenwagen (13) oder dem Kettenteilabschnitt (11') ansetzenden Vorschub- und Antriebskräften zur Fortbewegung des Kluppenwagens (13) und/oder des Kettenteilabschnitts (11'), und
- die zumindest eine Stabilisierungsrolle (19d, 19d', 19d") oder das zumindest eine Stabilisierungs-Gleitelement (19d, 19d', 19d") ist senkrecht oder quer zur Längsrichtung (LR) verstellbar;
- für die zumindest eine Stabilisierungsrolle (19d, 19d', 19d") oder das zumindest eine Stabilisierungs-Gleitelement (19d, 19d', 19d") ist ein Kraft- oder Kraftfederspeicher (23) vorgesehen, worüber die zumindest eine Stabilisierungsrolle (19d, 19d', 19d") oder das zumindest eine Stabilisierungs-Gleitelement (19d, 19d', 19d") mit vorgebbarer oder voreinstellbarer Kraft von der Einspannseite (13c) weg in Richtung Führungsschienenseite (13d) gegenüber dem Kluppenwagen (13) und/oder gegenüber dem Kettenteilabschnitt (11') der Transportkettenanordnung (11) ausweichbar kraftbeaufschlagt und/oder vorgespannt gehalten ist.

2. Kluppenwagen nach Anspruch 1, **dadurch gekennzeichnet, dass** ferner eine Dämpfungseinrichtung (33) vorgesehen ist, die auf die zumindest eine Stabilisierungsrolle (19d) oder das zumindest eine Stabilisierungs-Gleitelement (19d) zumindest mittelbar zur Verringerung eines Schwingungsverhaltens einwirkt, vorzugsweise parallel zum Federweg der Kraft- oder Kraftfederspeichereinrichtung (23) wobei die Dämpfungseinrichtung (33) vorzugsweise Teil der Kraft- oder Kraftfederspeichereinrichtung (23) ist.

3. Kluppenwagen nach einem der vorherigen Ansprüche, **dadurch gekennzeichnet, dass** die Führungseinrichtung (20) einen Schwenkhebel (25) umfasst oder aus diesem besteht, der um eine Hebelachse (27) gegenüber dem Kluppenwagen (13) und/oder dem Bolzen (11c) des Kettenteilabschnitts (11') zumindest mit einer Bewegungskomponente von der Einspannseite (13c) weg in Richtung Führungsschienenseite (13d) und umgekehrt verschwenkbar ist, wobei zumindest die zumindest eine Stabilisierungsrolle (19d, 19d', 19d") oder das zumindest eine Stabilisierungs-Gleitelement (19d, 19d', 19d") an einer zur Hebelachse (27) versetzt liegenden Halteposition (28) gehalten ist.

4. Kluppenwagen nach Anspruch 3, **dadurch gekennzeichnet, dass** der Schwenkhebel (25)
- als einarmiger Schwenkhebel ausgebildet ist, und dass an dem Schwenkhebel (25) ferner der Kraft- oder Kraftfederspeicher (23) an einer Angriffsstelle (30) ansetzt, wobei die Halteposition (28) für die Stabilisierungsrolle (19d) oder das Stabilisierungs-Gleitelement (19d) und die Angriffsstelle (30) für den Kraft- oder Kraftfederspeicher (23) versetzt zur Hebelachse (27) vorgesehen sind, wobei
a) die Halteposition (28) der Hebelachse (27) näherliegt als die Angriffsstelle (30), oder
b) die Halteposition (28) zur Hebelachse (27) entfernter liegt als die Angriffsstelle (30), oder
c) die Halteposition (28) und die Angriffsstelle (30) an gleicher Stelle an dem Schwenkhebel (25) vorgesehen sind, oder
- als doppelarmiger Schwenkhebel (25) ausgebildet ist, an dessen einem Hebelarm die Stabilisierungsrolle (19d, 19d', 19d") oder das Stabilisierungs-Gleitelement (19d, 19d', 19d") und an dem zur Hebelachse (27) gegenüberliegenden Hebelarm die Ansatzstelle für den Kraft- oder Kraftfederspeicher (23) vorgesehen ist, oder
- als Doppelhebel oder als Hebelpaar ausgebildet ist, der zwei übereinander angeordnete und in Richtung seiner Schwenkachse (27) axial versetzt zueinander liegende Schwenkhebelabschnitte (25', 25") umfasst, zwischen denen die zumindest eine Stabilisierungsrolle (19d, 19d', 19d") oder das zumindest eine Stabilisierungs-Gleitelement (19d, 19d', 19d") gehalten ist, wobei vorzugsweise der Doppelhebel (25; 25', 25") auf Seiten seiner Schwenkachse (27) mit einem zugehörigen Achskörper (27') und auf der dazu gegenüberliegenden Seite über ein Verbindungselement (25b) verbunden ist und ferner vorzugsweise an dem Verbindungselement (25b) die Ansatzstelle (30) für den Kraft- oder Kraftfederspeicher (23) gebildet ist

5. Kluppenwagen nach Anspruch 4, **dadurch gekennzeichnet, dass** die Stabilisierungsrolle (19d, 19d', 19d") oder das Stabilisierungs-Gleitelement (19d, 19d', 19d") auf dem Schwenkhebel (25) drehbar gelagert oder zumindest um einen Winkelbereich verschwenkbar gehalten ist.

6. Kluppenwagen nach einem der vorherigen Ansprüche, **dadurch gekennzeichnet, dass** sich der Kraft- oder Kraftfederspeicher (23):
a) an dem Kluppenkörper (13) abstützt; oder
b) an einem weiteren Bolzen (11c) abstützt, der zwei andere Kettensegmente (11₁, 11₂) des Kettenteilabschnitts (11') der Transportkettenanordnung (11) miteinander verbindet, wobei
der Bolzen (11c) und/oder der weitere Bolzen (11c) vorzugsweise fest mit dem Befestigungsabschnitt des Kluppenwagens (13) verbunden, insbesondere verschraubt ist.

7. Kluppenwagen nach einem der vorherigen Ansprüche, **gekennzeichnet durch** die folgenden Merkmale:
- der Kluppenwagen (13) umfasst zumindest eine Laufrolle (19c, 19c', 19c") oder zumindest ein Gleitelement (19c, 19c', 19c");
- die zumindest eine Laufrolle (19c, 19c', 19c") oder das zumindest eine Gleitelement (19c, 19c', 19c") ist derart am Kluppenwagen (13) angeordnet, dass es mit einer filmabseitigen Lauf- oder Gleitfläche (7c) oder mit einer filmseitigen Lauf- und/oder Gleitfläche (7d) der Führungsschienenanordnung (7) in Kontakt bringbar ist, wohingegen die zumindest eine Stabilisierungsrolle (19d, 19d', 19d") oder das zumindest eine Stabilisierungs-Gleitelement (19d, 19d', 19d") mit der jeweils anderen filmseitigen Lauf- und/oder Gleitfläche (7d) oder filmabseitigen Lauf- oder Gleitfläche (7c) in Kontakt bringbar ist.

8. Kluppenwagen nach Anspruch 7, **gekennzeichnet durch** die folgenden Merkmale:
- der Kluppenwagen (13) umfasst einen oberen Abschnitt und einen unteren Abschnitt, die von einem oberen und einem unteren Teil des Kluppenkörpers (13) abstehen und dazu ausgebildet sind, die Führungsschienenanordnung (7) zu umgreifen;
- der Kluppenwagen (13) umfasst zumindest eine obere Laufrolle (19c, 19c') und eine untere Laufrolle (19c, 19c") oder ein oberes Gleitelement (19c, 19c') und ein unteres Gleitelement (19c, 19c'');
- die zumindest eine obere Laufrolle (19c, 19c') oder das zumindest eine obere Gleitelement (19c, 19c') ist derart am oberen Abschnitt oder am oberen Teil des Kluppenwagens angeordnet, dass es mit:
a) einem oberen Bereich der filmabseitigen Lauf- oder Gleitfläche (7c) der Führungsschienenanordnung (7) in Kontakt bringbar ist; oder
b) mit einem oberen Bereich der filmseitigen Lauf- und/oder Gleitfläche (7d) der Führungsschienenanordnung (7) in Kontakt bringbar ist;
- die zumindest eine untere Laufrolle (19c, 19c") oder das zumindest eine untere Gleitelement (19c, 19c") ist derart am unteren Abschnitt oder am unteren Teil des Kluppenwagens (13) angeordnet, dass es mit
a) einem unteren Bereich der filmabseitigen Lauf- oder Gleitfläche (7c) der Führungsschienenanordnung (7) in Kontakt bringbar ist; oder
b) mit einem oberen Bereich der filmseitigen Lauf- und/oder Gleitfläche (7d) der Führungsschienenanordnung (7) in Kontakt bringbar ist;
- es ist eine weitere Stabilisierungsrolle (19d, 19d', 19d") oder ein weiteres Stabilisierungs-Gleitelement (19d, 19d', 19d") vorgesehen und mittels einer Führungseinrichtung (20):
a) unmittelbar am Kluppenwagen (13) gehalten; oder
b) über den Bolzen (11c) oder den weiteren Bolzen (11c), der zwei Kettenglieder (11₁, 11₂) des Kettenteilabschnitts (11') der Transportkettenanordnung (11) miteinander verbindet, mittelbar am Kluppenwagen (13) gehalten.
- die zumindest eine Stabilisierungsrolle (19d, 19d', 19d") und die eine weitere Stabilisierungsrolle (19d, 19d', 19d") sind übereinander oder versetzt übereinander angeordnet; und
die obere und die untere Laufrolle (19c, 19c', 19c") sind beide mit der filmabseitigen Lauf- oder Gleitfläche (7c) oder mit der der filmseitigen Lauf- und/oder Gleitfläche (7d) in Kontakt bringbar; oder
die obere Laufrolle (19c, 19c') ist mit der filmabseitigen Lauf- oder Gleitfläche (7c) oder mit der der filmseitigen Lauf- und/oder Gleitfläche (7d) und die untere Laufrolle (19c, 19c") ist mit der gegenüberliegenden filmseitigen Lauf- und/oder Gleitfläche (7d) oder mit der filmabseitigen Lauf- oder Gleitfläche (7c) in Kontakt bringbar;
- die zumindest eine Stabilisierungsrolle (19d, 19d') und die eine weitere Stabilisierungsrolle (19d, 19d") sind beide mit der filmabseitigen Lauf- oder Gleitfläche (7c) oder mit der der filmseitigen Lauf- und/oder Gleitfläche (7d) in Kontakt bringbar; oder
die zumindest eine Stabilisierungsrolle (19d, 19d') ist mit der filmabseitigen Lauf- oder Gleitfläche (7c) oder mit der der filmseitigen Lauf- und/oder Gleitfläche (7d) und die eine weitere Stabilisierungsrolle (19d, 19d") ist mit der gegenüberliegenden filmseitigen Lauf- und/oder Gleitfläche (7d) oder mit der filmabseitigen Lauf- oder Gleitfläche (7c) in Kontakt bringbar.

9. Kluppenwagen nach Anspruch 8, **gekennzeichnet durch** die folgenden Merkmale:
- der Kluppenwagen (13) umfasst eine obere Gewichtsrolle (19a) oder ein oberes Gewichts-Gleitelement (19a), wobei die obere Gewichtsrolle (19a) oder das obere Gewichts-Gleitelement (19a) derart am oberen Abschnitt oder am oberen Teil des Kluppenwagens (13) angeordnet ist, dass die obere Gewichtsrolle (19a) oder das obere Gewichts-Gleitelement (19a) mit einer oberen Lastschienenfläche (7a) der Führungsschienenanordnung (7) in Kontakt bringbar ist; und/oder
- der Kluppenwagen (13) umfasst eine Sicherungsrolle (19b) oder ein Sicherungs-Gleitelement (19b), wobei die Sicherungsrolle (19b) oder das Sicherungs-Gleitelement (19b) derart am unteren Abschnitt oder am unteren Teil des Kluppenwagens (13) angeordnet ist, dass die Sicherungsrolle (19b) oder das Sicherungs-Gleitelement (19b) mit einer Gegenschienenfläche (7b) der Führungsschienenanordnung (7) in Kontakt bringbar ist.

10. Set umfassend einen Kluppenwagen (13) gemäß einem der vorherigen Ansprüche und zumindest einem Kettenteilabschnitt (11') einer Transportkettenanordnung (11) mit den folgenden Merkmalen:
- der Kettenteilabschnitt (11') umfasst mehrere Kettensegmente (11₁, 11₂), wobei jedes Kettensegment (11₁, 11₂) an einem Ende mit einem benachbarten Kettensegment (11₁, 11₂) durch einen Bolzen (11c) verbunden ist;
- jedes Kettensegment (11₁, 11₂) umfasst zwei parallel zueinander beabstandete Kettenglieder (11a) mit jeweils zwei Befestigungsöffnungen, die mit zwei anderen parallel zueinander beabstandeten Kettengliedern (11a) über den Bolzen (11c) miteinander verbunden sind;
- ein Abstandshalter (llb), insbesondere in Form einer Schonrolle, liegt zwischen den beiden innersten Kettengliedern (11a) der jeweils miteinander verbundenen Kettensegmente (11₁, 11₂) im Bereich ihrer Befestigungsöffnungen an, wobei der Bolzen (11c) den Abstandshalter (11b) durchsetzt, wobei zwischen dem Bolzen (11c) und dem Abstandshalter (11b) vorzugsweise noch eine Hülse (11d) vorgesehen ist, die im Bereich der Befestigungsöffnungen der beiden innersten Kettenglieder (11a) endet.

11. Reckanlage mit mehreren Kluppenwagen (13) gemäß einem oder mehreren der Ansprüche 1 bis 9, mit folgenden Merkmalen:
- mit zwei umlaufenden Führungsbahnen (2), die mit Seitenversatz quer zu einer Abzugsrichtung (1) einer zu reckenden Materialbahn (MB) angeordnet sind;
- längs der beiden Führungsbahnen (2) ist jeweils ein umlaufendes Transportsystem (3) mit einer Vielzahl von Kluppentransporteinheiten (KT) angeordnet, mit denen eine zu reckende Materialbahn (MB) seitlich erfassbar und durch die Reckanlage von einer Einlaufzone (EZ) zu einer Auslaufzone (AZ) hindurchbewegbar ist;
- die Kluppentransporteinheiten (KT) umfassen jeweils einen Kluppenwagen (13);
- die umlaufende Führungsbahn (2) umfasst eine Führungsschienenanordnung (7), längs der die Kluppenwagen (13) mittels Laufrollen (19c, 19c', 19c") oder Gleitelementen (19c, 19c', 19c") bzw. einer Gewichtsrolle (19a) oder einem Gewichts-Gleitelement (19a) bzw. einer Sicherungsrolle (19b) oder einem Sicherungs-Gleitelement (19b) bzw. zumindest einer Stabilisierungsrolle (19d, 19d', 19d") oder zumindest einem Stabilisierungs-Gleitelement (19d, 19d', 19d") abgestützt verfahrbar sind;
- die Führungsschienenanordnung (7) umfasst zumindest eine nach oben weisende Lastschienenfläche (7a) sowie eine filmabseitige liegende Lauf- und/oder Gleitfläche (7c) und eine filmseitige ausgerichtete Lauf- und/oder Gleitfläche (7d);
- auf der filmabseitig ausgerichteten Lauf- und/oder Gleitfläche (7c) sind Laufrollen (19c, 19c', 19c") und/oder Gleitelemente (19c, 19c', 19c") starr gelagert und/oder gehalten, die auf der filmabseitig ausgerichteten Lauf- und/oder Gleitfläche (7c) abrollen bzw. gleiten;
- auf der filmseitig ausgerichteten Lauf- und/oder Gleitfläche (7d) ist die zumindest eine Stabilisierungsrolle (19d, 19d', 19d") oder zumindest ein Stabilisierungs-Gleitelement (19d, 19d', 19d") vorgesehen, welches mit der filmseitig ausgerichteten Lauf- und/oder Gleitfläche (7d) in Kontakt steht,
- die zumindest eine Stabilisierungsrolle (19d, 19d', 19d") oder das zumindest eine Stabilisierungs-Gleitelement (19d, 19d', 19d") ist senkrecht oder quer zur Führungsschienenanordnung (7) und damit senkrecht oder quer zur materialbahnseitig ausgerichteten Lauf- und/oder Gleitfläche (7d) verstellbar.

12. Reckanlage nach Anspruch 10 oder 11, **gekennzeichnet durch** die folgenden Merkmale:
- der Kluppenwagen (13) umfasst zumindest zwei Stabilisierungsrollen (19d, 19d', 19d") oder Stabilisierungs-Gleitelemente (19d, 19d', 19d"), wobei die zumindest eine Stabilisierungsrolle (19d, 19d') oder das zumindest Stabilisierungs-Gleitelement (19d, 19d', 19d") näher zur oberen Lastschienenfläche (7a) angeordnet ist, wohingegen die zumindest eine weitere Stabilisierungsrolle (19d, 19d") oder das zumindest eine weitere Stabilisierungs-Gleitelement (19d) näher zur unteren Lauf- oder Gleitfläche (7b) angeordnet ist.

13. Reckanlage nach einem der Ansprüche 10 bis 12, **dadurch gekennzeichnet,**
- **dass** zur oberen Lastschienenfläche (7a) näher liegend ein Paar von in Richtung der Führungsschienenanordnung (7) versetzt liegenden Laufrollen (19c, 19c') und/oder Gleitelemente (19c, 19c') an dem Kluppenwagen (13) angeordnet ist, und/oder
- das zur Gegenschienenfläche (7b) näher liegend ein Paar von in Richtung der Führungsschienenanordnung (7) versetzt liegenden Laufrollen (19c, 19c") und/oder Gleitelemente (19c, 19c') an dem Kluppenwagen (13) angeordnet ist,
- und **dass** zwischen den Laufrollen (19c, 19c', 19c") und/oder Gleitelementen (19c, 19c', 19c") des einen und/oder des andern Paars von Laufrollen (19c, 19c', 19c") und/oder Gleitelemente (19c, 19c', 19c") auf der dazu gegenüberliegenden Seite der Führungsschienenanordnung (7) eine Stabilisierungsrolle (19d, 19d', 19d") oder ein Stabilisierungs-Gleitelement (19d, 19d', 19d") am Kluppenwagen (13) vorgesehen ist oder sind, wobei die zumindest eine Stabilisierungsrolle (19d, 19d', 19d") oder das zumindest eine Stabilisierungs-Gleitelement (19d, 19d', 19d") über eine Führungseinrichtung (20) in Richtung der filmseitig angeordneten Lauf- und/oder Gleitfläche (7d) verstellbar vorgespannt ist.

14. Reckanlage nach einem der Ansprüche 10 bis 13, **dadurch gekennzeichnet, dass** die Führungsschienenanordnung (7)
- aus einer Mono-Schiene (7) besteht, wobei der Kluppenwagen (13) so ausgebildet ist, dass die filmabseitig vorgesehenen und am Kluppenwagen (13) montierte obere Lastschienenfläche (7a) teils übergreift und teils die nach unten weisende Gegenschienenfläche (7b) untergreift, oder
- zweigeteilt ist und aus einer Duo-Schiene besteht und zwei Führungsschienenabschnitte (7', 7") umfasst, die zumindest mit einer Vertikalkomponente oder mit Vertikalversatz unter Ausbildung eines Führungsschienenabstandes (41) übereinander angeordnet sind, wobei der Kluppenwagen (13) so ausgebildet ist, dass die auf der filmabseitig vorgesehenen, an der Lauf- und/oder Gleitfläche (7c) angreifenden Laufrollen (19c, 19c', 19c") oder Gleitelemente (19c, 19c', 19c") teils den oberen Führungsschienenabschnitt (7') untergreifen und teils den unteren Führungsschienenabschnitt (7b) übergreifen.

15. Reckanlage nach einem der Ansprüche 10 bis 14, **dadurch gekennzeichnet, dass**:
a) die einzelnen Kluppenwagen (13) ein Teil des jeweiligen Kettenteilabschnitts der Transportkettenanordnung (11) sind, so dass der Kraftfluss der angetriebenen Transportkettenanordnung (11') über die einzelnen Kluppenwagen (13) hinweg verläuft, oder
b) die Transportkettenanordnung (11) durchgängig ist, wobei die Kluppenwagen (13) als separate Bauteile mit dem jeweiligen Kettenteilabschnitt der Transportkettenanordnung (11) montiert sind und nicht im Kraftfluss der Transportkettenanordnung (11) liegen.

## Claims

1. A tenter-clip carriage (13) for a stretching system, comprising the following features:
- the tenter-clip carriage (13) has a longitudinal direction (LR) and a transverse direction (QR),
a. wherein the longitudinal direction (LR) runs between a leading side (13a) and a trailing side (13b) opposite thereto; and
b. wherein the transverse direction (QR) runs transversely or perpendicularly to the longitudinal direction (LR) between a clamping side (13c), aligned laterally therewith, for a material web (MB) to be stretched and a guide rail side (13d) opposite thereto;
- the tenter-clip carriage (13) comprises a clip body, wherein the clip body (13) has a clamping device via which a material web edge (17) of a material web (MB) to be stretched can be clamped;
- the tenter-clip carriage (13) comprises fastening portions in order to fasten the tenter-clip carriage to a partial chain portion (11') of a conveyor chain arrangement of the stretching system;
- the tenter-clip carriage (13) comprises at least one stabilising roller (19d, 19d', 19d") or at least one stabilising sliding element (19d, 19d', 19d"); **characterised by** the following features:
- the at least one stabilising roller (19d, 19d', 19d") or the at least one stabilising sliding element (19d, 19d', 19d") is, by means of a guide device (20):
a) held directly on the tenter-clip carriage (13); or
b) held indirectly on and/or connected to the tenter-clip carriage (13) via a pin (11c) that connects two chain segments (11₁, 11₂) of the partial chain portion (11') of the conveyor chain arrangement (11) to one another;
and, specifically, unaffected by the feed and drive forces acting on the tenter-clip carriage (13) or the partial chain portion (11') to move the tenter-clip carriage (13) and/or the partial chain portion (11'), and
- the at least one stabilising roller (19d, 19d', 19d") or the at least one stabilising sliding element (19d, 19d', 19d") can be adjusted perpendicularly or transversely to the longitudinal direction (LR);
- for the at least one stabilising roller (19d, 19d', 19d") or the at least one stabilising sliding element (19d, 19d', 19d"), a force accumulator or spring-force accumulator (23) is provided via which the at least one stabilising roller (19d, 19d', 19d") or the at least one stabilising sliding element (19d, 19d', 19d") is held forcibly in a yieldable manner and/or held in a pretensioned manner with a predeterminable or presettable force away from the clamping side (13c) in the direction of the guide rail side (13d) opposite the tenter-clip carriage (13) and/or opposite the partial chain portion (11') of the conveyor chain arrangement (11).

2. The tenter-clip carriage according to claim 1, **characterised in that** a damping device (33) is also provided that acts on the at least one stabilising roller (19d) or the at least one stabilising sliding element (19d) at least indirectly to reduce vibration characteristics, preferably parallel to the spring travel of the force accumulator or spring-force accumulator (23) whereby the damping device (33) is preferable part of the force accumulator or spring-force accumulator (23).

3. The tenter-clip carriage according to any of the preceding claims, **characterised in that** the guide device (20) comprises or consists of a pivot lever (25) that is pivotable about a lever axis (27) with respect to the tenter-clip carriage (13) and/or the pin (11c) of the partial chain portion (11') away from the clamping side (13c) in the direction of the guide rail side (13d) and vice versa at least with one movement component, wherein at least the at least one stabilising roller (19d, 19d', 19d") or the at least one stabilising sliding element (19d, 19d', 19d") is held in a holding position (28) offset to the lever axis (27).

4. The tenter-clip carriage according to claim 3, **characterised in that** the pivot lever (25)
- is designed as a one-armed pivot lever, and **in that** the force accumulator or spring-force accumulator (23) also attaches to an application point (30) on the pivot lever (25), wherein the holding position (28) for the stabilising roller (19d) or the stabilising sliding element (19d) and the application point (30) for the force accumulator or spring-force accumulator (23) are provided offset to the lever axis (27), wherein
a) the holding position (28) is closer to the lever axis (27) than the application point (30), or
b) the holding position (28) is farther away from the lever axis (27) than the application point (30), or
c) the holding position (28) and the application point (30) are provided at the same point on the pivot lever (25), or
- is designed as a double-armed pivot lever (25), on one lever arm of which the stabilising roller (19d, 19d', 19d") or the stabilising sliding element (19d, 19d', 19d") is provided and on the lever arm of which opposite to the lever axis (27) the attachment point for the force accumulator or spring-force accumulator (23) is provided, or
- is designed as a double lever or a pair of levers that comprises two pivot lever portions (25', 25") arranged one above the other and axially offset in the direction of its pivot axis (27), between which the at least one stabilising roller (19d, 19d', 19d") or the at least one stabilising sliding element (19d, 19d', 19d") is held whereby preferable the double lever (25; 25', 25") is connected to an associated axle body (27') on the side of its pivot axis (27) and via a connecting element (25b) on the opposite side, wherein the attachment point (30) for the force accumulator or spring-force accumulator (23) is preferably formed on the connecting element (25b).

5. The tenter-clip carriage according to claim 4, **characterised in that** the stabilizing roller (19d, 19d', 19d") or the stabilizing slide element (19d, 19d', 19d") is rotatably mounted on the pivot lever (25) or is held such that it can be pivoted at least through an angular range.

6. The tenter-clip carriage according to any of the preceding claims, **characterised in that** the force accumulator or spring-force accumulator (23):
a) is supported on the clip body (13); or
b) is supported on a further pin (11c) that connects two other chain segments (11₁, 11₂) of the partial chain portion (11') of the conveyor chain arrangement (11) to one another whereby
the pin (11c) and/or the further pin (11c) is preferably firmly connected, in particular screwed, to the fastening portion of the tenter-clip carriage (13).

7. The tenter-clip carriage according to any of the preceding claims, **characterised by** the following features:
- the tenter-clip carriage (13) comprises at least one roller (19c, 19c', 19c") or at least one sliding element (19c, 19c', 19c");
- the at least one roller (19c, 19c', 19c") or the at least one sliding element (19c, 19c', 19c") is arranged on the tenter-clip carriage (13) in such a way that it can be brought into contact with a rolling or sliding surface (7c) on the side remote from the film or with a rolling and/or sliding surface (7d) of the guide rail arrangement (7) on the film side, whereas the at least one stabilising roller (19d, 19d', 19d") or the at least one stabilising sliding element (19d, 19d', 19d") can be brought into contact with the other film-side rolling and/or sliding surface (7d) or rolling or sliding surface (7c) on the side remote from the film.

8. The tenter-clip carriage according to claim 7, **characterised by** the following features:
- the tenter-clip carriage (13) comprises an upper portion and a lower portion that protrude from an upper and a lower part of the clip body (13) and are designed to engage around the guide rail arrangement (7);
- the tenter-clip carriage (13) comprises at least one upper roller (19c, 19c') and one lower roller (19c, 19c") or an upper sliding element (19c, 19c') and a lower sliding element (19c, 19c");
- the at least one upper roller (19c, 19c') or the at least one upper sliding element (19c, 19c') is arranged on the upper portion or on the upper part of the tenter-clip carriage in such a way that:
a) it can be brought into contact with an upper region of the rolling or sliding surface (7c) of the guide rail arrangement (7) on the side remote from the film; or
b) it can be brought into contact with an upper region of the film-side rolling and/or sliding surface (7d) of the guide rail arrangement (7);
- the at least one lower roller (19c, 19c") or the at least one lower sliding element (19c, 19c") is arranged on the lower portion or on the lower part of the tenter-clip carriage (13) in such a way that
a) it can be brought into contact with a lower region of the rolling or sliding surface (7c) of the guide rail arrangement (7) on the side remote from the film; or
b) it can be brought into contact with an upper region of the film-side rolling and/or sliding surface (7d) of the guide rail arrangement (7);
- a further stabilising roller (19d, 19d', 19d") or a further stabilising sliding element (19d, 19d', 19d") is provided and, by means of a guide device (20):
a) held directly on the tenter-clip carriage (13); or
b) held indirectly on the tenter-clip carriage (13) via the pin (11c) or the further pin (11c) that connects two chain links (11₁, 11₂) of the partial chain portion (11') of the conveyor chain arrangement (11) to one another,
- the at least one stabilising roller (19d, 19d', 19d") and the one further stabilising roller (19d, 19d', 19d") are arranged one above the other or offset one above the other; and
the upper and lower rollers (19c, 19c', 19c") can both be brought into contact with the rolling or sliding surface (7c) on the side remote from the film or with the film-side rolling and/or sliding surface (7d); or the upper roller (19c, 19c') can be brought into contact with the rolling or sliding surface (7c) on the side remote from the film or with the film-side rolling and/or sliding surface (7d) and the lower roller (19c, 19c") can be brought into contact with the opposite film-side rolling and/or sliding surface (7d) or with the rolling or sliding surface (7c) on the side remote from the film;
- the at least one stabilising roller (19d, 19d') and the one further stabilising roller (19d, 19d") can both be brought into contact with the rolling or sliding surface (7c) on the side remote from the film or with the film-side rolling and/or sliding surface (7d); or
the at least one stabilising roller (19d, 19d') can be brought into contact with the rolling or sliding surface (7c) on the side remote from the film or with the film-side rolling and/or sliding surface (7d) and the one further stabilising roller (19d, 19d") can be brought into contact with the opposite film-side rolling and/or sliding surface (7d) or with the rolling or sliding surface (7c) on the side remote from the film.

9. The tenter-clip carriage according to claim 8, **characterised by** the following features:
- the tenter-clip carriage (13) comprises an upper weighted roller (19a) or an upper weighted sliding element (19a), wherein the upper weighted roller (19a) or the upper weighted sliding element (19a) is arranged on the upper portion or on the upper part of the tenter-clip carriage (13) in such a way that the upper weighted roller (19a) or the upper weighted sliding element (19a) can be brought into contact with an upper load-bearing rail surface (7a) of the guide rail arrangement (7); and/or
- the tenter-clip carriage (13) comprises a securing roller (19b) or a securing sliding element (19b), wherein the securing roller (19b) or the securing sliding element (19b) is arranged on the lower portion or on the lower part of the tenter-clip carriage (13) in such a way that the securing roller (19b) or the securing sliding element (19b) can be brought into contact with an opposing rail surface (7b) of the guide rail arrangement (7).

10. A set comprising a tenter-clip carriage (13) according to any of the preceding claims, and at least one partial chain portion (11') of a conveyor chain arrangement (11) comprising the following features:
- the partial chain portion (11') comprises a plurality of chain segments (11₁, 11₂), wherein each chain segment (11₁, 11₂) is connected at one end to an adjacent chain segment (11₁, 11₂) by a pin (11c);
- each chain segment (11₁, 11₂) comprises two chain links (11a) spaced parallel to one another and each having two fastening openings that are connected to one another via the pin (11c) with two other chain links (11a) spaced parallel to one another;
- a spacer (11b), in particular in the form of a protective roller, rests between the two innermost chain links (11a) of the chain segments (11₁, 11₂) connected to one another in the region of their fastening openings, wherein the pin (11c) passes through the spacer (11b) whereby also a sleeve (11d) is provided between the pin (11c) and the spacer (11b) which ends in the region of the fastening openings of the two innermost chain links (11a) .

11. A stretching system comprising a plurality of tenter-clip carriages (13) according to one or more of claims 1 to 9, comprising the following features:
- two circumferential guide tracks (2) that are arranged with a lateral offset transversely to an extraction direction (1) of a material web (MB) to be stretched;
- a circumferential conveyor system (3) having a plurality of tenter-clip conveyor units (KT) is arranged along each of the two guide tracks (2), with which circumferential conveyor system a material web (MB) to be stretched can be grasped from the side and passed through the stretching system from an inlet zone (EZ) to an outlet zone (AZ);
- the tenter-clip conveyor units (KT) each comprise a tenter-clip carriage (13);
- the circumferential guide track (2) comprises a guide rail arrangement (7) along which the tenter-clip carriages (13) are movable in a supported manner by means of rollers (19c, 19c', 19c") or sliding elements (19c, 19c', 19c"), or a weighted roller (19a) or a weighted sliding element (19a), or a securing roller (19b) or a securing sliding element (19b), or at least one stabilising roller (19d, 19d', 19d") or at least one stabilising sliding element (19d, 19d', 19d");
- the guide rail arrangement (7) comprises at least one upwardly facing load-bearing rail surface (7a) and a rolling and/or sliding surface (7c) on the side remote from the film and a rolling and/or sliding surface (7d) aligned on the film side;
- rollers (19c, 19c', 19c") and/or sliding elements (19c, 19c', 19c") are rigidly mounted and/or held on the rolling and/or sliding surface (7c) aligned on the side remote from the film, which rollers and/or sliding elements roll or slide on the rolling and/or sliding surface (7c) aligned on the side remote from the film;
- the at least one stabilising roller (19d, 19d', 19d") or at least one stabilising sliding element (19d, 19d', 19d") is provided on the rolling and/or sliding surface (7d) aligned on the film side, which stabilising roller or stabilising sliding element is in contact with the rolling and/or sliding surface (7d) aligned on the film side,
- the at least one stabilising roller (19d, 19d', 19d") or the at least one stabilising sliding element (19d, 19d', 19d") can be adjusted perpendicularly or transversely to the guide rail arrangement (7) and thus perpendicularly or transversely to the rolling and/or sliding surface (7d) aligned on the material web side.

12. The stretching system according to claim 11, **characterised by** the following features:
- the tenter-clip carriage (13) comprises at least two stabilising rollers (19d, 19d', 19d") or stabilising sliding elements (19d, 19d', 19d"), wherein the at least one stabilising roller (19d, 19d') or the at least stabilising sliding element (19d, 19d', 19d") is arranged closer to the upper load-bearing rail surface (7a), whereas the at least one further stabilising roller (19d, 19d") or the at least one further stabilising sliding element (19d) is arranged closer to the lower rolling or sliding surface (7b).

13. The stretching system according to any of claims 10 to 12, **characterised in that**
- a pair of rollers (19c, 19c') and/or sliding elements (19c, 19c') are arranged on the tenter-clip carriage (13) closer to the upper load-bearing rail surface (7a) and offset in the direction of the guide rail arrangement (7), and/or
- **in that** a pair of rollers (19c, 19c") and/or sliding elements (19c, 19c') are arranged on the tenter-clip carriage (13) closer to the opposing rail surface (7b) and offset in the direction of the guide rail arrangement (7),
- and **in that** a stabilising roller (19d, 19d', 19d") or a stabilising sliding element (19d, 19d', 19d") is or are provided on the tenter-clip carriage (13) between the rollers (19c, 19c', 19c") and/or sliding elements (19c, 19c', 19c") of the one and/or the other pair of rollers (19c, 19c', 19c") and/or sliding elements (19c, 19c', 19c") on the opposite side of the guide rail arrangement (7), wherein the at least one stabilising roller (19d, 19d', 19d") or the at least one stabilising sliding element (19d, 19d', 19d") is adjustably preloaded via a guide device (20) in the direction of the rolling and/or sliding surface (7d) arranged on the film side.

14. The stretching system according to any of claims 10 to 13, **characterised in that** the guide rail arrangement (7)
- consists of a mono-rail (7), wherein the tenter-clip carriage (13) is designed in such a way that it in part overlaps from above the upper load-bearing rail surface (7a) provided on the side remote from the film and mounted on the tenter-clip carriage (13) and in part overlaps the downwardly facing opposing rail surface (7b) from below, or
- is divided into two parts and consists of a duo-rail and comprises two guide rail portions (7', 7") that at are at least arranged one above the other with a vertical component or a vertical offset to form guide rail spacing (41), wherein the tenter-clip carriage (13) is designed in such a way that the rollers (19c, 19c', 19c") or sliding elements (19c, 19c', 19c") provided on the side remote from the film and acting on the rolling and/or sliding surface (7c) in part overlap the upper guide rail portion (7') from below and in part overlap the lower guide rail portion (7b) from above.

15. The stretching system according to any of claims 10 to 14, **characterised in that**:
a) the individual tenter-clip carriages (13) are part of the respective partial chain portion of the conveyor chain arrangement (11) such that the force flux of the driven conveyor chain arrangement (11') runs over the individual tenter-clip carriages (13), or
b) the conveyor chain arrangement (11) is continuous, wherein the tenter-clip carriages (13) are mounted as separate components with the respective partial chain portion of the conveyor chain arrangement (11) and are not disposed in the force flux of the conveyor chain arrangement (11).

## Revendications

1. Chariot à pinces (13) destiné à une installation d'étirage, avec les caractéristiques suivantes :
- le chariot à pinces (13) présente une direction longitudinale (LR) et une direction transversale (QR),
a. la direction longitudinale (LR) s'étendant entre un côté avant (13a) et un côté à la traîne (13b) en face de celui-ci ; et
b. la direction transversale (QR) s'étendant perpendiculairement ou verticalement par rapport à la direction longitudinale (LR) entre un côté d'entrée (13c) pour une bande de matière (MB) à étirer orienté latéralement par rapport à celle-ci et un côté de rail de guidage (13d) lui étant opposé ;
- le chariot à pinces (13) comprend un corps à pinces, le corps à pinces (13) présentant un dispositif de serrage par lequel un bord de bande de matière (17) d'une bande de matière (MB) à étirer peut être solidement serré ;
- le chariot à pinces (13) comprend des segments de fixation afin de fixer celui-ci sur un segment partiel de chaîne (11') d'un ensemble de chaînes de transport de l'installation d'étirage ;
- le chariot à pinces (13) comprend au moins un rouleau de stabilisation (19d, 19d', 19d") ou au moins un élément de glissement stabilisateur (19d, 19', 19d") ;
**caractérisé par** les caractéristiques suivantes :
- l'au moins un rouleau de stabilisation (19d, 19d', 19d") ou l'au moins un élément de glissement stabilisateur (19d, 19d', 19d"), au moyen d'un dispositif de guidage (20) :
a) est maintenu immédiatement sur le chariot à pinces (13) ; ou
b) est maintenu, et/ou est relié indirectement au chariot à pinces (13) par le biais d'un boulon (11c) qui relie deux segments de chaine (11₁, 11₂) du segment partiel de chaine (11') de l'ensemble de chaines de transport (11) l'un à l'autre ;
et ceci indépendamment de forces d'avancée et d'entraînement s'appliquant sur le chariot à pinces (13) ou sur le segment partiel de chaine (11') pour le déplacement vers l'avant du chariot à pinces (13) et/ou du segment partiel de chaine (11'), et
- l'au moins un rouleau de stabilisation (19d, 19d', 19"), ou l'au moins un élément de glissement stabilisateur (19d, 19d', 19d"), peut être réglé perpendiculairement ou transversalement par rapport à la direction longitudinale (LR) ;
- un accumulateur d'énergie ou accumulateur d'énergie à ressort (23) est prévu pour l'au mois un rouleau de stabilisation (19d, 19d', 19d") ou l'au moins un élément de glissement stabilisateur (19d, 19d', 19d"), par lequel l'au moins un rouleau de stabilisation (19d, 19d', 19d"), ou l'au moins un élément de glissement stabilisateur (19d, 19d', 19d"), est maintenu avec une force pouvant être prédéfinie ou préréglée en partant du côté d'entrée (13c) en direction du côté des rails de guidage (13d) par rapport au chariot à pinces (13) et/ou est maintenu soumis à une force en pouvant dévier par rapport au segment partiel de chaine (11') de l'ensemble de chaînes de transport (11), et/ou est maintenu précontraint.

2. Chariot à pinces selon la revendication 1, **caractérisé en ce qu'**en outre un dispositif d'amortissement (33) est prévu, qui agit sur l'au moins un rouleau de stabilisation (19d), ou l'au moins un élément de glissement stabilisateur (19d), au moins indirectement, pour la diminution d'un comportement en oscillations, de préférence, parallèlement par rapport au trajet de ressort du dispositif d'accumulation d'énergie ou d'accumulation d'énergie à ressort (23), où le dispositif d'amortissement (33) fait de préférence partie du dispositif d'accumulation d'énergie ou d'accumulation d'énergie à ressort (23).

3. Chariot à pinces selon l'une des revendications précédentes, **caractérisé en ce que** le dispositif de guidage (20) comprend un levier de pivotement (25) ou en est constitué, qui peut être pivoté autour d'un axe de levier (27) par rapport au chariot à pinces (13) et/ou au boulon (11c) du segment partiel de chaîne (11') au moins avec une composante de mouvement à partir d'un côté d'entrée (13c) en direction du côté rails de guidage (13d) et inversement, où au moins l'au moins un rouleau de stabilisation (19d, 19d', 19d"), ou l'au moins un élément de glissement stabilisateur (19d, 19d', 19d"), est maintenu dans une position de maintien (28) située décalée par rapport à l'axe de levier (27).

4. Chariot à pinces selon la revendication 3, **caractérisé en ce que** le levier de pivotement (25)
- est conçu sous forme de levier de pivotement à un bras et qu'en outre, au niveau du levier de pivotement (25), l'accumulateur d'énergie ou accumulateur d'énergie à ressort (23) débute au niveau d'un point de départ (30), où la position de maintien (28) pour le rouleau de stabilisation (19d) ou l'élément de glissement stabilisateur (19d) et le point de départ (30) pour l'accumulateur d'énergie ou accumulateur d'énergie à ressort (23) sont prévus décalés par rapport à l'axe de levier (27), où
a) la position de maintien (28) de l'axe de levier (27) se situe plus près que le point de départ (30) ou
b) la position de maintien (28) se situe plus loin par rapport à l'axe de levier (27) que le point de départ (30), ou
c) la position de maintien (28) et le point de départ (30) sont prévus au même endroit sur le levier de pivotement (25), ou
- est conçu sous forme de levier de pivotement à deux bras (25) sur un bras de levier duquel est prévu le rouleau de stabilisation (19d, 19d', 19d"), ou l'élément de glissement stabilisateur (19d, 19d', 19d"), et le point de départ pour l'accumulateur d'énergie ou l'accumulateur d'énergie à ressort (23) est prévu sur le bras de levier situé en face de l'axe de levier (27), ou
- est conçu sous forme de levier double ou sous forme d'une paire de leviers, qui comprend deux segments de leviers de pivotement (25', 25") disposés l'un sur l'autre et décalés axialement l'un par rapport à l'autre en direction de son axe de pivotement (27), entre lesquels est maintenu l'au moins un rouleau de stabilisation (19d, 19d', 19d"), ou l'au moins un élément de glissement stabilisateur (19d, 19d', 19d"), où, de préférence, le levier double (25 ; 25', 25") est relié sur des côtés de son axe de pivotement (27) avec un corps d'ancrage (27') correspondant et sur le côté lui étant opposé est relié par un élément de liaison (25b), et en outre, de préférence, le point de départ (30) pour l'accumulateur d'énergie ou l'accumulateur d'énergie à ressort (23) est formé sur l'élément de liaison (25b).

5. Chariot à pinces selon la revendication 4, **caractérisé en ce que** le rouleau de stabilisation (19d, 19d', 19d"), ou l'élément de glissement stabilisateur (19d, 19d', 19d"), est logé, en pouvant être mis en rotation, sur le levier de pivotement (25), ou est au moins maintenu pivotable sur une zone angulaire.

6. Chariot à pinces selon l'une des revendications précédentes, **caractérisé en ce que** l'accumulateur d'énergie ou l'accumulateur d'énergie à ressort (23) :
a) s'appuie sur le corps de pince (13) ; ou
b) s'appuie sur un nouveau boulon (11c) qui relie deux autres segments de chaines (11₁, 11₂) du segment partiel de chaine (11') de l'ensemble de chaines de transport (11) l'un à l'autre, où
le boulon (11c), et/ou le nouveau boulon (11c), est relié de préférence solidement, notamment vissé, avec le segment de fixation du chariot à pinces (13).

7. Chariot à pinces selon l'une des revendications précédentes, **caractérisé par** les propriétés suivantes :
- le chariot à pinces (13) comprend au moins un galet (19c, 19c', 19c") ou au moins un élément de glissement (19c, 19c', 19c") ;
- l'au moins un galet (19c, 19c', 19c"), ou l'au moins un élément de glissement (19c, 19c', 19c"), est disposé sur le chariot à pinces (13) de sorte qu'il puisse être mis en contact avec une surface de roulement ou de glissement (7c) à l'écart d'un film ou avec une surface de roulement ou de glissement (7d) du côté d'un film de l'ensemble de rails de guidage (7), par contre, l'au moins un rouleau de stabilisation (19d, 19d', 19d"), ou l'au moins un élément de glissement stabilisateur (19d, 19d', 19d"), peut être mis en contact respectivement avec l'autre surface de roulement ou de glissement (7d) du côté film ou surface de roulement ou de glissement (7c) à l'écart du film.

8. Chariot à pinces selon la revendication 7, **caractérisé par** les propriétés suivantes :
- le chariot à pinces (13) comprend un segment supérieur et un segment inférieur, qui dépassent d'une partie supérieure et d'une partie inférieure du corps de pince (13) et qui sont conçus pour enserrer l'ensemble de rails de guidage (7) ;
- le chariot à pinces (13) comprend au moins un galet supérieur (19c, 19c') et un galet inférieur (19c, 19c"), ou un élément de glissement supérieur (19c, 19c') et un élément de glissement inférieur (19c, 19c") ;
- l'au moins un galet supérieur (19c, 19c'), ou l'au moins un élément de glissement supérieur (19c, 19c"), est disposé de telle manière sur le segment supérieur ou sur la partie supérieure du chariot à pinces qu'il :
a) puisse être mis en contact avec une zone supérieure de la surface de roulement ou de glissement (7c) à l'écart d'un film de l'ensemble de rails de guidage (7) ; ou
b) puisse être mis en contact avec une zone supérieure de la surface de roulement ou de glissement (7d) du côté d'un film de l'ensemble de rails de guidage (7) ;
- l'au moins un galet inférieur (19c, 19c"), ou l'au moins un élément de glissement inférieur (19c, 19c"), est disposé de telle manière sur le segment inférieur ou sur la partie inférieure du chariot à pinces qu'il
a) puisse être mis en contact avec une zone inférieure de la surface de roulement ou de glissement (7c) à l'écart d'un film de l'ensemble de rails de guidage (7) ; ou
b) puisse être mis en contact avec une zone supérieure de la surface de roulement ou de glissement (7d) du côté d'un film de l'ensemble de rails de guidage (7) ;
- un nouveau rouleau de stabilisation (19d, 19d', 19d"), ou un nouvel élément de glissement stabilisateur (19d, 19d', 19d"), est prévu et, au moyen d'un dispositif de guidage (20) :
a) est maintenu directement sur le chariot à pinces (13) ; ou
b) est maintenu indirectement sur le chariot à pinces (13) via le boulon (11c), ou le nouveau boulon (11c), qui relie deux éléments de chaîne (11₁, 11₂) du segment partiel de chaîne (11') de l'ensemble de chaînes de transport (11) l'un à l'autre.
- l'au moins un rouleau de stabilisation (19d, 19d', 19d") et le nouveau rouleau de stabilisation (19d, 19d', 19d") sont disposés l'un sur l'autre ou disposés l'un au-dessus de l'autre, décalés ; et
le galet supérieur et le galet inférieur (19c, 19c', 19c") peuvent être mis en contact tous les deux avec la surface de roulement ou de glissement (7c) à l'écart du film ou avec la surface de roulement ou de glissement (7d) du côté du film ; ou
le galet supérieur (19c, 19c') peut être mis en contact avec la surface de roulement ou de glissement (7c) du côté à l'écart du film ou avec la surface de roulement ou de glissement (7d) du côté du film, et le galet inférieur (19c, 19c") peut être mis en contact avec la surface de roulement et/ou de glissement (7d) du côté film à l'opposé ou avec la surface de roulement ou de glissement (7c) du côté à l'écart du film ;
- l'au moins un rouleau de stabilisation (19d, 19d') et le nouveau rouleau de stabilisation (19d, 19d") peuvent être mis en contact tous les deux avec la surface de roulement et de glissement (7c) du côté à l'écart du film ou avec la surface de roulement et/ou de glissement (7d) du côté du film ; ou
l'au moins un rouleau de stabilisation (19d, 19d') peut être mis en contact avec la surface de roulement ou de glissement (7c) du côté à l'écart du film ou avec la surface de roulement ou de glissement (7d) du côté du film et le nouveau rouleau de stabilisation (19d, 19d") peut être mis en contact avec la surface de roulement et/ou de glissement (7d) du côté film opposée ou avec la surface de roulement ou de glissement (7c) du côté à l'écart du film.

9. Chariot à pinces selon la revendication 8, **caractérisé par** les propriétés suivantes :
- le chariot à pinces (13) comprend un rouleau de poids supérieur (19a) ou un élément de poids ou de glissement supérieur (19a), où le rouleau de poids supérieur (19a), ou l'élément de poids et de glissement supérieur (19a), est disposé sur le segment supérieur ou sur la partie supérieure du chariot à pinces (13) de telle manière que le rouleau de poids supérieur (19a), ou l'élément de poids et de glissement supérieur (19a), puisse être mis en contact avec une surface de rail de charge (7a) supérieure de l'ensemble de rails de guidage (7) ; et/ou
- le chariot à pinces (13) comprend un rouleau de sécurité (19b) ou un élément de sécurité ou de glissement supérieur (19b), où le rouleau de sécurité (19b), ou l'élément de sécurité et de glissement (19b), est disposé sur le segment inférieur ou sur la partie inférieure du chariot à pinces (13) de telle manière que le rouleau de sécurité (19b), ou l'élément de sécurité et de glissement supérieur (19b), puisse être mis en contact avec une surface de rail complémentaire (7b) de l'ensemble de rails de guidage (7).

10. Ensemble comprenant un chariot à pinces (13) selon l'une des revendications précédentes et au moins un segment partiel de chaîne (11') d'un ensemble de chaines de transport (11) avec les propriétés suivantes :
- le segment de chaine (11') comprend plusieurs segments de chaine (11₁, 11₂), chaque segment de chaine (11₁, 11₂) étant relié à une extrémité avec un segment de chaine (11₁, 11₂) voisin par un boulon (11c);
- chaque segment de chaine (11₁, 11₂) comprend deux maillons de chaine (11a) parallèles espacés l'un par rapport à l'autre avec respectivement des orifices de fixation qui sont reliés ensemble avec deux autres maillons de chaine (11a) parallèles espacés l'un par rapport à l'autre par le biais du boulon (11c);
- un espaceur (11b), notamment sous la forme d'un rouleau de protection, se situe entre les deux maillons de chaine (11a) les plus à l'intérieur des segments de chaine (11₁, 11₂) respectivement reliés l'un à l'autre dans la zone de leurs orifices de fixation, où le boulon (11c) passe à travers l'espaceur (11b), où, de préférence, encore un manchon (11d) est prévu entre le boulon (11c) et l'espaceur (11b) qui s'arrête dans la zone des orifices de fixation des deux maillons de chaine (11a) les plus à l'intérieur.

11. Installation d'étirage pourvue de plusieurs chariots à pinces (13) selon une ou plusieurs parmi les revendications 1 à 9, avec les propriétés suivantes :
- pourvue de deux bandes de guidage (2) périphériques qui sont disposées avec un décalage latéral perpendiculairement par rapport à une direction de retrait (1) d'une bande de matière (MB) à étirer ;
- un système de transport (3) est respectivement disposé le long des deux bandes de guidage (2) avec une multiplicité d'unités de transport à pinces (KT) périphériques, avec lesquelles une bande de matière (MB) à étirer peut être saisie latéralement et être déplacée à travers l'installation d'étirage à partir d'une zone d'entrée (EZ) jusqu'à une zone de sortie (AZ) ;
- les unités de transport à pinces (KT) comprennent respectivement un chariot à pinces (13);
- la bande de guidage (2) périphérique comprend un ensemble de rails de guidage (7) le long desquels les chariots à pinces (13) peuvent circuler en s'appuyant au moyen de galets (19c, 19c', 19c") ou d'éléments de glissements (19c, 19c', 19c"), respectivement, d'un rouleau de poids (19a) ou d'un élément de coulissement de poids (19a), respectivement d'un rouleau de sécurité (19b) ou d'un élément de glissement de sécurité (19b), respectivement, d'au moins un rouleau de stabilisation (19d, 19d', 19d") ou d'au moins un élément de glissement de stabilisation (19d, 19d', 19d") ;
- l'ensemble de rails de guidage (7) comprend au moins une surface de rails de charge (7a) orientée vers le haut ainsi qu'une surface de roulement et/ou de glissement (7c) se situant sur un côté à l'écart du film et une surface de roulement et/ou de glissement (7d) orientée du côté du film ;
- des galets (19c, 19c', 19c") et/ou des éléments de glissement (19c, 19c', 19c") sont logés immobiles et/ou maintenus sur la surface de roulement et/ou de glissement (7c) du côté à l'écart du film, qui roulent, respectivement, glissent sur la surface de roulement et/ou de glissement (7c) orientée du côté à l'écart du film ;
- l'au moins un rouleau de stabilisation (19d, 19d', 19d"), ou l'au moins un élément de glissement stabilisateur (19d, 19d', 19d"), lequel est en contact avec la surface de roulement et/ou de glissement (7d) orientée du côté du film, est prévu sur la surface de roulement et/ou de glissement (7d) orientée du côté du film,
- l'au moins un rouleau de stabilisation (19d, 19d', 19d"), ou l'au moins un élément de glissement stabilisateur (19d, 19d', 19d"), est perpendiculaire ou transversal par rapport à l'ensemble de rails de guidage (7) et ainsi est réglable perpendiculairement ou transversalement par rapport à la surface de roulement et/ou de glissement (7d) orientée du côté de la bande de matière.

12. Installation d'étirage selon la revendication 10 ou la revendication 11, **caractérisée par** les propriétés suivantes :
- le chariot à pinces (13) comprend au moins deux rouleaux de stabilisation (19d, 19d', 19d") ou éléments de glissement stabilisateurs (19d, 19d', 19d"), où l'au moins un rouleau de stabilisation (19d, 19d'), ou l'au moins un élément de glissement stabilisateur (19d, 19d', 19d"), est disposé plus près de la surface de rails de charges supérieure (7a), par contre, l'au moins un nouveau rouleau de stabilisation (19d, 19d"), ou l'au moins un nouvel élément de glissement stabilisateur (19d), est disposé plus près de la surface de roulement ou de glissement (7b) inférieure.

13. Installation d'étirage selon l'une des revendications 10 à 12, **caractérisée en ce**
- **qu'**une paire de galets (19c, 19c') situés décalés en direction de l'ensemble de rails de guidage (7) et/ou des éléments de glissement (19c, 19c') est disposée sur le chariot à pinces (13) plus proche de la surface de rail de charge (7a) supérieure, et/ou
- **qu'**une paire de galets (19c, 19c") et/ou d'éléments de glissement (19c, 19c') située décalée en direction de l'ensemble de rails de guidage (7) est disposée sur le chariot à pinces (13) se situant plus proche de la surface de rail complémentaire (7b),
- et **qu'**entre les galets (19c, 19c', 19c") et/ou les éléments de glissement (19c, 19c', 19c") d'une paire et/ou de l'autre paire de galets (19c, 19c', 19c") et/ou d'éléments de glissement (19c, 19c', 19c") sur le côté opposé de l'ensemble de rails de guidage (7), il est prévu ou il y a un rouleau de stabilisation (19d, 19d', 19d") ou un élément de glissement stabilisateur (19d, 19d', 19d") sur le chariot à pinces (13), où l'au moins un rouleau de stabilisation (19d, 19d', 19d"), ou l'au moins un élément de glissement stabilisateur (19d, 19d', 19d"), est réglable précontraint par le biais d'un dispositif de guidage (20) en direction de la surface de roulement et/ou de glissement (7d) disposée du côté du film.

14. Installation d'étirage selon l'une des revendications 10 à 13, **caractérisée en ce que** l'ensemble de rails de guidage (7)
- est constitué d'un mono rail (7), où le chariot à pinces (13) est conçu de telle manière qu'il passe partiellement par-dessus la surface de rail de charge (7a) supérieure prévue du côté à l'écart du film et montée sur le chariot à pinces (13) et passe partiellement en-dessous de la surface de rail complémentaire (7b) orientée vers le bas, ou
- est en deux parties et est constitué d'un rail duo et comprend deux segments de rails de guidage (7', 7") qui sont disposés l'un sur l'autre avec une composante verticale ou avec un décalage vertical moyennant la formation d'un espace de rails de guidage (41), où le chariot à pinces (13) est conçu de telle manière que les galets (19c, 19c', 19c") prévus du côté à l'écart du film se mettant en prise sur la surface de roulement et/ou de glissement (7c) ou les éléments de glissement (19c, 19c', 19c") passent partiellement en-dessous du segment de rail de guidage (7') supérieur et passent partiellement au-dessus du segment de rail de guidage (7b) inférieur.

15. Installation d'étirage selon l'une des revendications 10 à 14, **caractérisée en ce que** :
a) les chariots à pinces (13) individuels sont une partie du segment partiel de chaine respectif de l'ensemble de chaines de transport (11) de sorte que le flux d'énergie de l'ensemble de chaines de transport (11') entraîné s'éloigne par les chariots à pinces (13) individuels, ou
b) l'ensemble de chaines de transport (11) est continu, les chariots à pinces (13) étant montés sous forme de composants séparés avec le segment partiel de chaîne respectif de l'ensemble de chaines de transport (11) et n'étant pas dans le flux d'énergie de l'ensemble de chaines de transport (11).
